# EUROPEAN PATENT APPLICATION

(11) **EP 4 760 917 A1**
(43) Date of publication of application: **17.06.2026**
(21) Application number: 23950252.9
(22) Date of filing: 31.08.2023
(51) Int. Cl.: H01M 50/242

(54) **BATTERY AND ELECTRIC DEVICE**

(71) Applicant: Contemporary Amperex Technology Co., Limited, Ningde, Fujian 352100 (CN)
(72) Inventor: LONG, Chao, Ningde, Fujian 352100 (CN); CHEN, Xingdi, Ningde, Fujian 352100 (CN); ZHANG, Wenhui, Ningde, Fujian 352100 (CN); WANG, Peng, Ningde, Fujian 352100 (CN)
(74) Representative: Kraus & Lederer PartGmbB
(86) International application number: PCT/CN2023/116353
(87) International publication number: WO 2025/043672

(57) **Abstract**

A battery (100) and an electric device are provided. The battery (100) includes a cell assembly (10), a case cover (20), and a constraining structure (30). The case cover (20) is configured to be fixedly connected to the cell assembly (10), the case cover (20) has a cavity (23), the cavity (23) is configured to accommodate at least a portion of the cell assembly (10), the constraining structure (30) is configured to constrain swelling of the cell assembly (10), and the constraining structure (30) is disposed on the case cover (20).

## Description

### TECHNICAL FIELD

The present application relates to the field of battery technologies, and specifically, to a battery and an electric device.

### BACKGROUND

With the rapid development of new energy technology, electric vehicles are increasingly favored by people. An electric vehicle is a vehicle that relies entirely or partially on electric energy provided by a battery as a power source.

Currently, due to the large weight of batteries and their low mass energy density, the range performance of electric vehicles is reduced, which is not conducive to the widespread adoption of electric vehicles. Therefore, how to reduce the weight of batteries is a technical problem that urgently needs to be addressed.

### SUMMARY

One of the objectives of embodiments of the present application is to provide a battery and an electric device, aiming to address the technical problem of the large weight of batteries in the related art.

To address the above technical problem, the technical solution adopted by the embodiments of the present application is as follows.

An embodiment of the present application provides a battery including a cell assembly, a case cover, and a constraining structure, where the case cover is configured to be fixedly connected to the cell assembly, the case cover has a cavity, the cavity is configured to accommodate at least a portion of the cell assembly, the constraining structure is configured to constrain swelling of the cell assembly, and the constraining structure is disposed on the case cover.

The battery provided in this embodiment of the present application has at least the following beneficial effects: the cell assembly in the battery provided in this embodiment of the present application is accommodated in the cavity of the case cover and fixedly connected to the case cover, and the constraining structure configured to constrain the swelling of the cell assembly is disposed on the case cover. Compared to the conventional approach of disposing the cell assembly and the constraining structure within a frame of the battery, this arrangement can at least reduce the height dimension of the frame, thereby reducing the weight of the frame, effectively reducing the weight of the battery, increasing the mass energy density of the battery, and thus effectively improving the range performance of the electric device.

In some embodiments of the present application, the constraining structure includes two beam structures spaced apart, where the two beam structures cooperate to clamp the cell assembly.

By adopting the above technical solution, under the clamping action of the two beam structures, the swelling force of the cell assembly can be resisted, thereby limiting the deformation of the cell assembly caused by the swelling, and effectively improving the safety performance of the battery.

In some embodiments of the present application, the case cover includes a cover plate and an enclosing structure connected to the cover plate, where the enclosing structure and the cover plate enclose the cavity, and the beam structure is connected to at least one of the cover plate and the enclosing structure.

The adoption of the above technical solution facilitates the installation operation of the beam structure, enabling the two beam structures to more effectively clamp the cell assembly.

In some embodiments of the present application, the beam structure includes an adapter and a beam body, where the adapter includes a matching portion and an installation portion connected to each other, the matching portion is shape-fitted and connected to at least a portion of an inner wall surface of the enclosing structure, and the beam body is connected to the installation portion.

By adopting the above technical solution, since the matching portion of the adapter can be shape-fitted and connected to at least a portion of the inner wall surface of the enclosing structure, and the beam body is connected to the installation portion of the adapter, the beam body can be connected to the enclosing structure through the adapter, facilitating the assembly of the beam body, effectively improving the connection strength between the beam body and the case cover, thereby effectively reducing the risk of deformation or displacement of the beam body, and effectively improving the reliability of the battery.

In some embodiments of the present application, the enclosing structure includes a first wall and a second wall that are arranged opposite each other, the adapter includes a first adapter and a second adapter, where the matching portion of the first adapter is shape-fitted and connected to at least a portion of an inner wall surface of the first wall, the matching portion of the second adapter is shape-fitted and connected to at least a portion of an inner wall surface of the second wall, one end of the beam body is connected to the installation portion of the first adapter, and the other end of the beam body is connected to the installation portion of the second adapter.

By adopting the above technical solution, two ends of the beam body can be both connected to the enclosing structure through the adapters, further improving the connection strength between the beam body and the case cover, thereby further reducing the risk of deformation or displacement of the beam body.

In some embodiments of the present application, two ends of the beam body are each provided with an installation cavity, where the installation portion of the first adapter is embedded in one installation cavity, and the installation portion of the second adapter is embedded in the other installation cavity.

By adopting the above technical solution, the installation portion of the first adapter and the installation portion of the second adapter can be disposed in the installation cavities of the beam body, effectively improving the integration degree between the installation portion of the first adapter, the installation portion of the second adapter, and the beam body, making a connection structure between the beam body and the first adapter and a connection structure between the beam body and the second adapter more compact, effectively reducing the space occupied by the connection structure between the beam body and the first adapter and the connection structure between the beam body and the second adapter, thereby effectively increasing the volumetric energy density of the battery.

In some embodiments of the present application, the beam body is connected to the cover plate.

By adopting the above technical solution, the connection strength between the beam body and the case cover is further improved, thereby further reducing the risk of deformation or displacement of the beam body.

In some embodiments of the present application, the beam body includes a first main body and a first flange, where one end of the first main body is connected to the installation portion of the first adapter, another end of the first main body is connected to the installation portion of the second adapter, the first flange is connected to a side of the first main body along a width direction of the beam body, and the first flange is connected to the cover plate.

By adopting the above technical solution, the connection area between the beam body and the cover plate is effectively increased, further improving the connection strength between the beam body and the case cover, thereby further reducing the risk of deformation or displacement of the beam body.

In some embodiments of the present application, the first flange is connected to a side of the first main body facing the cell assembly, the cover plate is provided with a first groove, the first flange is connected to a bottom of the first groove, and a depth of the first groove is greater than or equal to a thickness of the first flange.

By adopting the above technical solution, the first groove provides an avoidance space for the first flange to avoid the cell assembly, thereby effectively alleviating the mutual interference between the first flange and the cell assembly.

In some embodiments of the present application, the beam body further includes a second flange, where the second flange is connected to a side of the first main body facing away from the cell assembly, and the second flange is connected to the cover plate.

By adopting the above technical solution, the connection area between the beam body and the cover plate is further increased, further improving the connection strength between the beam body and the case cover, thereby further reducing the risk of deformation or displacement of the beam body.

In some embodiments of the present application, the beam body is welded to the cover plate.

By adopting the above technical solution, the beam body can be connected to the cover plate without the need to additionally provide connection holes on the cover plate, effectively improving the sealing performance of the battery and effectively simplifying the assembly process of the beam body and the cover plate, thereby effectively improving the assembly efficiency of the battery.

In some embodiments of the present application, the enclosing structure includes a first wall and a second wall that are arranged opposite each other, and the matching portion includes a first matching portion and a second matching portion, where the first matching portion is shape-fitted and connected to at least a portion of an inner wall surface of the first wall, the second matching portion is shape-fitted and connected to at least a portion of an inner wall surface of the second wall, one end of the installation portion is connected to the first matching portion, another end of the installation portion is connected to the second matching portion, and the beam body extends in a direction from the first matching portion toward the second matching portion.

By adopting the above technical solution, one end of the installation portion can be connected to the enclosing structure through the first matching portion, and another end of the installation portion can be connected to the enclosing structure through the second matching portion, effectively improving the connection strength between the installation portion and the case cover. Since the beam body extends in the direction from the first matching portion toward the second matching portion, connecting the beam body to the installation portion can enhance the connection strength between the beam body and the case cover, thereby further reducing the risk of deformation or displacement of the beam body.

In some embodiments of the present application, the beam body is provided with an installation cavity, and the installation portion is embedded in the installation cavity.

By adopting the above technical solution, the installation portion can be disposed in the installation cavity of the beam body, effectively improving the integration degree between the installation portion and the beam body, making a connection structure between the beam body and the adapter more compact, and effectively reducing the space occupied by the connection structure between the beam body and the adapter, thereby effectively increasing the volumetric energy density of the battery.

In some embodiments of the present application, the installation portion is connected to the cover plate.

By adopting the above technical solution, the connection strength between the adapter and the case cover is effectively improved, and connecting the beam body to the installation portion can enhance the connection strength between the beam body and the case cover, thereby further reducing the risk of deformation or displacement of the beam body.

In some embodiments of the present application, the installation portion includes a second main body and a third flange, where the beam body is installed on the second main body, and the third flange is connected between the second main body and the cover plate.

By adopting the above technical solution, the connection area between the installation portion and the cover plate is effectively increased, further improving the connection strength between the adapter and the case cover, and connecting the beam body to the installation portion can enhance the connection strength between the beam body and the case cover, thereby further reducing the risk of deformation or displacement of the beam body.

In some embodiments of the present application, the third flange is connected to a side of the second main body facing the cell assembly, the cover plate is provided with a second groove, the third flange is connected to a bottom of the second groove, and a depth of the second groove is greater than or equal to a thickness of the third flange.

By adopting the above technical solution, the second groove provides an avoidance space for the third flange to avoid the cell assembly, thereby effectively alleviating the mutual interference between the third flange and the cell assembly.

In some embodiments of the present application, the installation portion further includes a fourth flange, where the fourth flange is connected to a side of the second main body facing away from the cell assembly, and the fourth flange is connected to the cover plate.

By adopting the above technical solution, the connection area between the installation portion and the cover plate is further increased, further improving the connection strength between the adapter and the case cover, and connecting the beam body to the installation portion can enhance the connection strength between the beam body and the case cover, thereby further reducing the risk of deformation or displacement of the beam body.

In some embodiments of the present application, the installation portion is welded to the cover plate.

By adopting the above technical solution, the installation portion can be connected to the cover plate without the need to additionally provide connection holes on the cover plate, effectively improving the sealing performance of the battery and effectively simplifying the assembly process of the installation portion and the cover plate, thereby effectively improving the assembly efficiency of the battery.

In some embodiments of the present application, the beam body has a support surface and an abutment surface, where the support surface is disposed facing away from the cell assembly, and the abutment surface is disposed opposite to the cell assembly and configured to abut against the cell assembly to resist the swelling force of the cell assembly.

By adopting the above technical solution, the swelling force of the cell assembly is effectively resisted, thereby effectively limiting the deformation of the cell assembly caused by the swelling, and effectively improving the safety performance of the battery.

In some embodiments of the present application, at least a portion of the support surface extends in an inclined or stepped manner in a direction from the cover plate toward the abutment surface.

By adopting the above technical solution, the support area of the beam body is effectively increased, and the support strength of the beam body is effectively improved, enabling the beam body to more effectively resist the swelling force of the cell assembly, thereby further reducing the risk of deformation or displacement of the beam body.

In some embodiments of the present application, the constraining structure further includes a first connecting member, where the first connecting member is connected between the two adjacent beam structures.

By adopting the above technical solution, the relative positions of two adjacent beam structures are effectively restricted, thereby further reducing the risk of deformation or displacement of the beam structures.

In some embodiments of the present application, the first connecting member is connected to a side of the beam structure away from the cover plate.

By adopting the above technical solution, the risk of interference between the first connecting member and the cell assembly is effectively reduced, facilitating the connection of the first connecting member to the beam structure.

In some embodiments of the present application, the case cover is configured to be connected to an external frame.

By adopting the above technical solution, at least a portion of the load of the cell assembly can be directly transferred to the external frame through the case cover, in other words, the external frame can bear at least a portion of the load of the cell assembly, thereby reducing the strength requirements for other support components of the battery, reducing the dimensions of these support components, for example, reducing the weight of the frame of the battery, effectively reducing the weight of the battery, increasing the mass energy density of the battery, and thus effectively improving the range performance of the electric device.

In some embodiments of the present application, the battery further includes a mounting assembly, where the case cover is connected to the mounting assembly, and the mounting assembly is configured to be connected to the external frame.

The adoption of the above technical solution facilitates the connection of the case cover to the external frame.

In some embodiments of the present application, at least a portion of the mounting assembly includes a support member and a second connecting member, where the support member is connected to the case cover, and the second connecting member is connected to the support member and configured to be connected to the external frame.

The adoption of the above technical solution facilitates the connection of the case cover to the external frame.

In some embodiments of the present application, the cell assembly is connected to a lower portion of the cover plate, the support member is connected to the cover plate, and the second connecting member connects the support member and the cover plate to the external frame.

By adopting the above technical solution, the strength of the cover plate is effectively improved, thereby effectively enhancing the load-bearing capacity of the cover plate for the cell assembly.

In some embodiments of the present application, the battery further includes a frame and a guard plate, where the case cover, the frame, and the guard plate are sequentially connected along a gravity direction of the battery.

By adopting the above technical solution, it effectively provides protection for the cell assembly.

In some embodiments of the present application, the frame includes a first support beam, where the first support beam includes a support beam body and an energy-absorbing beam body, and the energy-absorbing beam body is connected to a side of the support beam body facing away from the cell assembly.

By adopting the above technical solution, under a condition that the outer side of the battery is subjected to an external impact, the energy-absorbing beam body can effectively absorb the impact energy, thereby effectively mitigating the transfer of impact energy to the cell assembly through the frame, and effectively reducing the risk of damage to the cell assembly.

In some embodiments of the present application, the energy-absorbing beam body includes a main beam body and a first energy-absorbing body, where the main beam body is connected to a side of the support beam body facing away from the cell assembly and has a first energy-absorbing cavity, and the first energy-absorbing body is disposed in the first energy-absorbing cavity.

By adopting the above technical solution, under a condition that the outer side of the battery is subjected to an external impact, the impact energy can be transferred to the first energy-absorbing body through the main beam body, causing the main beam body and the first energy-absorbing body to deform sequentially, thereby enabling the energy-absorbing beam body to more effectively absorb the impact energy, and further reducing the risk of damage to the cell assembly.

In some embodiments of the present application, the guard plate includes a first plate, a second plate, and a second energy-absorbing body, where the first plate and the second plate are spaced apart along a height direction of the battery to form a second energy-absorbing cavity, and the second energy-absorbing body is disposed in the second energy-absorbing cavity.

By adopting the above technical solution, under a condition that the bottom of the battery is subjected to an external impact, the impact energy can be transferred to the second energy-absorbing body, causing the second energy-absorbing body to deform, thereby enabling the guard plate to more effectively absorb the impact energy, and further reducing the risk of damage to the cell assembly.

In some embodiments of the present application, the cell assembly is bonded to the case cover.

By adopting the above technical solution, the stress distribution between the cell assembly and the case cover can become more uniform, and the assembly process of the cell assembly and the case cover can also be simplified, thereby effectively improving the assembly efficiency of the battery.

An embodiment of the present application provides an electric device, including the battery described in any one of the above embodiments.

The electric device provided in this embodiment of the present application has at least the following beneficial effects: by adopting the battery described in any one of the above embodiments, the reliability of the electric device is effectively improved.

### BRIEF DESCRIPTION OF DRAWINGS

To more clearly illustrate the technical solutions in the embodiments of the present application, the accompanying drawings used in the description of the embodiments or exemplary technical descriptions are briefly introduced below. It is apparent that the accompanying drawings described below are merely some embodiments of the present application, and those of ordinary skill in the art can obtain other drawings based on these accompanying drawings without creative effort.
FIG. 1 is a schematic structural diagram of a vehicle according to an embodiment of the present application;
FIG. 2 is a schematic exploded structural diagram of a battery according to an embodiment of the present application;
FIG. 3 is a schematic exploded structural diagram of a battery according to an embodiment of the present application with a cell assembly, frame, and guard plate removed;
FIG. 4 is a schematic structural diagram of a case cover in the battery shown in FIG. 3;
FIG. 5 is a schematic structural diagram of an adapter in the battery shown in FIG. 3;
FIG. 6 is a schematic structural diagram of a beam body in the battery shown in FIG. 3;
FIG. 7 is a schematic front view structural diagram of the beam body shown in FIG. 6;
FIG. 8 is a schematic structural diagram of the battery shown in FIG. 3;
FIG. 9 is a schematic cross-sectional structural diagram of the battery shown in FIG. 8 along line A-A direction;
FIG. 10 is an enlarged schematic structural diagram of portion B of the battery shown in FIG. 9;
FIG. 11 is a schematic exploded structural diagram of a battery according to another embodiment of the present application with a cell assembly, frame, and guard plate removed;
FIG. 12 is a schematic structural diagram of a case cover in the battery shown in FIG. 11;
FIG. 13 is a schematic structural diagram of an adapter in the battery shown in FIG. 11;
FIG. 14 is a schematic structural diagram of a beam body in the battery shown in FIG. 11;
FIG. 15 is a schematic front view structural diagram of the beam body shown in FIG. 14;
FIG. 16 is a schematic structural diagram of the battery shown in FIG. 11;
FIG. 17 is a schematic cross-sectional structural diagram of the battery shown in FIG. 16 along line C-C direction;
FIG. 18 is an enlarged schematic structural diagram of portion D of the battery shown in FIG. 17;
FIG. 19 is a schematic structural diagram of a first support beam of the frame in the battery shown in FIG. 2;
FIG. 20 is a schematic front view structural diagram of a guard plate in the battery shown in FIG. 2;
FIG. 21 is a schematic structural diagram of a battery cell according to an embodiment of the present application;
FIG. 22 is a schematic top view structural diagram of the battery cell shown in FIG. 21; and
FIG. 23 is a schematic cross-sectional structural diagram of the battery cell shown in FIG. 22 along line E-E direction.

### Description of reference signs:

1000: vehicle;
100: battery; 10: cell assembly; 11: battery cell; 111: shell; 112: electrode assembly; 113: electrode terminal; 20: case cover; 21: cover plate; 211: first groove; 212: second groove; 22: enclosing structure; 221: first wall; 222: second wall; 23: cavity; 30: constraining structure; 31: beam structure; 311: adapter; 311a: first adapter; 311b: second adapter; 3111: matching portion; 3111a: first matching portion; 3111b: second matching portion; 3112: installation portion; 31121: second main body; 31122: third flange; 31123: fourth flange; 312: beam body; 3121: installation cavity; 3122: first main body; 3123: first flange; 3124: second flange; 3125: abutment surface; 3126: support surface; 313: first fastener; 32: first connecting member; 33: second fastener; 40: frame; 41: first support beam; 411: support beam body; 412: energy-absorbing beam body; 4121: main beam body; 4122: first energy-absorbing body; 4123: first energy-absorbing cavity; 42: second support beam; 50: guard plate; 51: first plate; 52: second plate; 53: second energy-absorbing body; 54: second energy-absorbing cavity; 60: mounting assembly; 61: support member; 62: second connecting member;
200: vehicle frame;
300: controller;
400: motor; and
500: wheel.

### DESCRIPTION OF EMBODIMENTS

To make the objectives, technical solutions, and advantages of the present application clearer, the present application is further described in detail below with reference to the accompanying drawings and embodiments. It should be understood that the specific embodiments described here are merely used to explain the present application and are not intended to limit the present application.

It should be noted that when a component is referred to as being "fixed to" or "disposed on" another component, it may be directly on the another component or indirectly on the another component. When a component is referred to as being "connected to" another component, it may be directly or indirectly connected to the another component. The terms "upper", "lower", "left", "right", and the like indicate orientations or positional relationships based on the orientations or positional relationships shown in the accompanying drawings, and are merely for convenience of description, not indicating or implying that the referred device or element must have a specific orientation, be constructed or operated in a specific orientation, and thus should not be construed as limiting the present application. For those of ordinary skill in the art, the specific meanings of the above terms can be understood based on specific circumstances. The terms "first", "second", "third", "fourth", "fifth", "sixth", and "seventh" are used only for descriptive purposes and should not be understood as indicating or implying relative importance or implicitly indicating the number of technical features. The meaning of "multiple" is two or more, unless otherwise explicitly specified.

An electric vehicle is a vehicle that relies entirely or partially on electric energy as a power source. An electric vehicle includes a vehicle frame, a battery, and an electric drive device, where the battery is typically installed at the bottom of the vehicle frame, and the electric drive device is typically installed at the front or rear of the vehicle frame. The battery is configured to provide electric energy to the electric drive device, and the electric drive device is configured to convert the electric energy into mechanical energy to drive the electric vehicle.

In the related art, a battery typically includes a cell assembly, a case cover, a frame, and a constraining structure, where the case cover covers the frame, the cell assembly is accommodated in the frame, and the constraining structure is installed in the frame and configured to constrain the swelling of the cell assembly. The frame is typically constructed by connecting multiple profiles and requires high strength, resulting in a large weight. However, since the frame needs to accommodate the cell assembly and the constraining structure, it also requires a relatively large height dimension, further increasing the weight of the frame, significantly decreasing the mass energy density of the battery, and consequently reducing the range performance of the electric vehicle, which is not conducive to the widespread adoption of electric vehicles.

To reduce the weight of the battery, in the battery provided in this embodiment of the present application, the cell assembly is accommodated in the cavity of the case cover and fixedly connected to the case cover, and the constraining structure configured to constrain the swelling of the cell assembly is disposed on the case cover. Compared to the conventional approach of disposing the cell assembly and the constraining structure within a frame of the battery, this arrangement can at least reduce the height dimension of the frame, thereby reducing the weight of the frame, effectively reducing the weight of the battery, increasing the mass energy density of the battery, and thus effectively improving the range performance of the electric device.

The battery disclosed in the embodiments of the present application can be used in electric devices that use a battery as a power source. The electric device can be, but is not limited to, a vehicle, a mobile phone, a portable device, a laptop, a ship, a spacecraft, an electric toy, and an electric tool. The vehicle can be a fuel vehicle, a gas vehicle, or a new energy vehicle, and the new energy vehicle can be a pure electric vehicle, a hybrid vehicle, or an extended-range vehicle. The spacecraft includes an airplane, a rocket, a space shuttle, a spaceship, and the like. The electric toy includes a fixed or mobile electric toy, such as a game console, an electric car toy, an electric ship toy, and an electric airplane toy. The electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, and an electric planer.

For convenience of description, the following embodiments take a vehicle as an example of an electric device according to an embodiment of the present application.

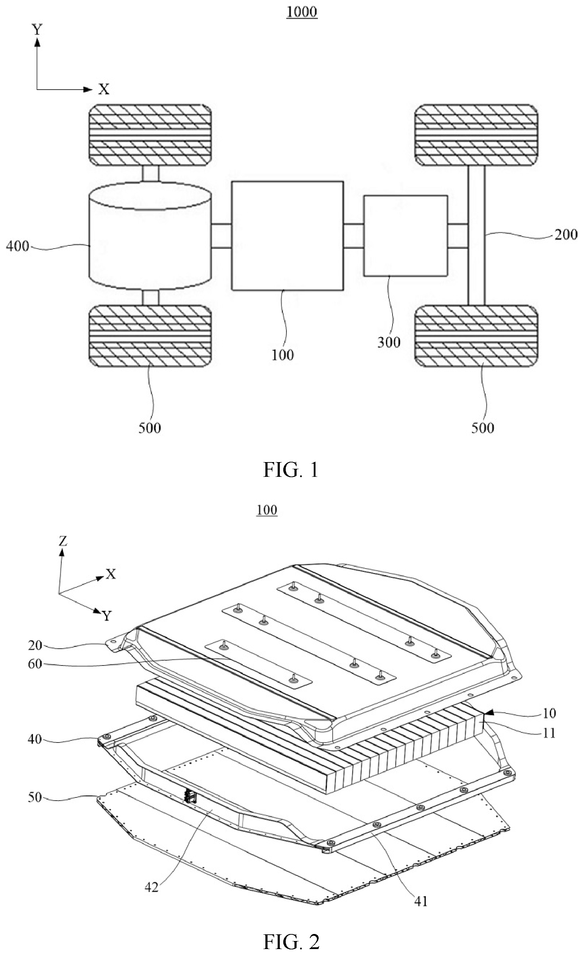

Referring to FIG. 1, FIG. 1 is a schematic structural diagram of a vehicle 1000 according to an embodiment of the present application. The vehicle 1000 can be a fuel vehicle, a gas vehicle, or a new energy vehicle, and the new energy vehicle can be a battery electric vehicle, a hybrid electric vehicle, or an extended-range electric vehicle. A battery 100 is disposed inside the vehicle 1000, and the battery 100 can be disposed at the bottom, front, or rear of the vehicle 1000. The battery 100 can be used for powering the vehicle 1000, for example, the battery 100 can serve as an operational power source for the vehicle 1000. The vehicle 1000 may further include a controller 300 and a motor 400, where the controller 300 is configured to control the battery 100 to supply power to the motor 400, for example, for the operational power requirements of the vehicle 1000 during starting, navigation, and driving.

In some embodiments of the present application, the battery 100 can serve not only as an operational power source for the vehicle 1000 but also as a driving power source for the vehicle 1000, replacing or partially replacing fuel or natural gas to provide driving power for the vehicle 1000.

Referring to FIG. 2, FIG. 2 is a schematic exploded diagram of a battery 100 according to an embodiment of the present application. The battery 100 includes a battery case and a cell assembly 10, where the cell assembly 10 is accommodated in the battery case. The battery case is configured to provide a space for accommodating a battery cell 11. The battery case may include a first part and a second part, where the first part and the second part are mutually covered, and the first part and the second part together define a space for accommodating the cell assembly 10. The first part may be a hollow structure with an opening at one end, and the second part may be a plate-like structure, where the second part covers the opening side of the first part, so that the first part and the second part together define the accommodating space; alternatively, both the first part and the second part may be hollow structures with an opening on one side, and the opening side of the first part covers the opening side of the second part. The battery case may have various shapes, such as a cylinder and a cuboid. In some embodiments, the battery case may serve as a part of the bottom structure of the vehicle frame 200 of the vehicle 1000. For example, a portion of the battery case may form at least a part of the floor panel of the vehicle frame 200, or a portion of the battery case may form at least a part of the cross beams and longitudinal beams of the vehicle frame 200.

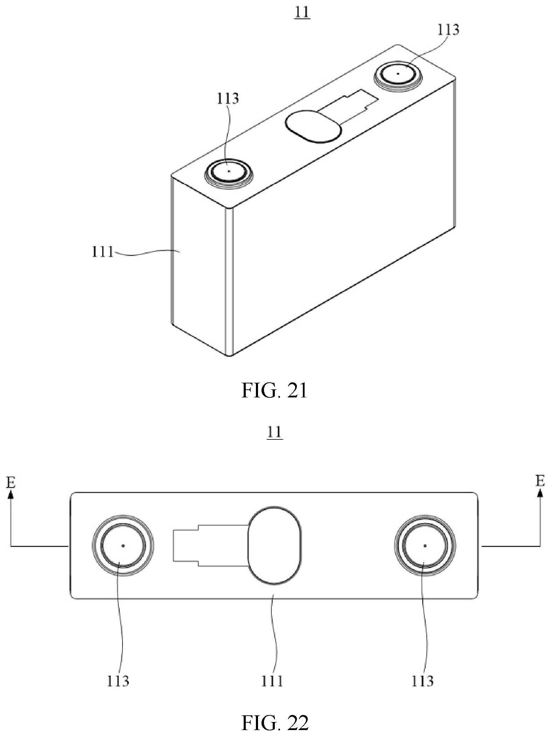

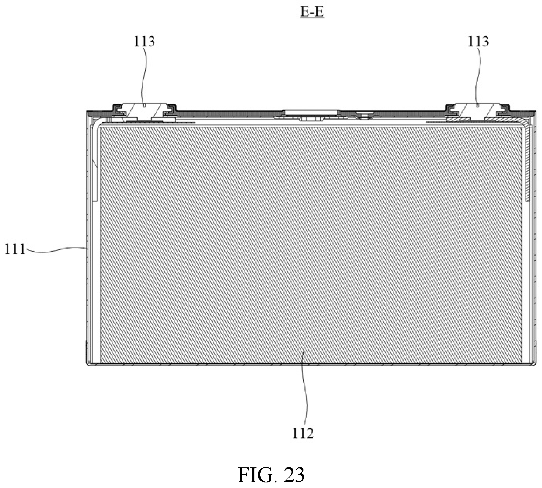

The cell assembly 10 is the main component of the battery 100, and configured to store electrical energy. The cell assembly 10 includes a battery cell 11, where the battery cell 11 is the smallest storage unit for storing electrical energy. Referring to FIGs. 21 to 23 together, the battery cell 11 includes a shell 111, an electrode assembly 112, and an electrode terminal 113.

The shell 111 is a component configured to provide an internal environment for the battery cell 11, where the internal environment can be used for accommodating the electrode assembly 112 and other functional components of the battery cell 11. The shape of the shell 111 may be, but is not limited to, a cuboid, a cylinder, and a hexagonal prism, and it can be understood that the shape of the shell 111 may be determined based on the specific shape of the electrode assembly 112. The material of the shell 111 may be, but is not limited to, copper, iron, aluminum, stainless steel, or aluminum alloy.

The electrode assembly 112 is a component in the battery cell 11 where electrochemical reactions occur. The electrode assembly 112 may be provided in one or more. The electrode assembly 112 is mainly made of a positive electrode plate, a negative electrode plate, and a separator through a winding process or a stacking process. During the charging and discharging process of the battery cell 11, active ions (for example, lithium ions) intercalate and deintercalate back and forth between the positive electrode plate and the negative electrode plate. The separator is disposed between the positive electrode plate and the negative electrode plate, and can serve to prevent short circuits between the positive and negative electrodes while allowing active ions to pass through. The positive electrode plate may include a positive electrode current collector, a positive electrode tab, and a positive electrode active material. The positive electrode tab is connected to the positive electrode current collector, and the positive electrode active material is disposed on at least one surface of the positive electrode current collector. For example, the positive electrode current collector has two surfaces opposite in its thickness direction, and the positive electrode active material is disposed on either or both of the two opposite surfaces of the positive electrode current collector. The negative electrode plate may include a negative electrode current collector, a negative electrode tab, and a negative electrode active material. The negative electrode tab is connected to the negative electrode current collector, and the negative electrode active material is disposed on at least one surface of the negative electrode current collector. For example, the negative electrode current collector has two surfaces opposite in its thickness direction, and the negative electrode active material is disposed on either or both of the two opposite surfaces of the negative electrode current collector. The separator is a separation membrane. The present application does not impose specific restrictions on the type of separation membrane, and any well-known porous structure separation membrane with good chemical and mechanical stability can be used.

The electrode terminal 113 is a component electrically connected to the electrode assembly 112 for outputting electrical energy from the battery cell 11 or inputting electrical energy to the battery cell 11. The electrode terminal 113 may be disposed on the shell 111, with a portion of the electrode terminal 113 extending into the internal environment of the battery cell 11 and directly or indirectly connected to the positive electrode tab or the negative electrode tab of the electrode assembly 112, and another portion of the electrode terminal 113 exposed to the external environment of the battery cell 11 and connected to a component such as a busbar or a sampling device. The electrode terminal 113 may have a columnar structure, such as a cylindrical structure or a prismatic structure, or the electrode terminal 113 may have a plate-like structure, such as a circular plate or a square plate, or the electrode terminal 113 may have other irregular three-dimensional structures, which are not specifically limited herein. The electrode terminal 113 may be made of a single conductive material or multiple conductive materials, where the conductive material may be, but is not limited to, copper, aluminum, nickel, and zinc, iron, which are not specifically limited herein.

The battery cell 11 may be multiple, and multiple battery cells 11 may be connected in series, in parallel, or in a mixed configuration, where a mixed configuration refers to a combination of both series and parallel connections among the multiple battery cells 11. The multiple battery cells 11 may be directly connected in series, in parallel, or in a mixed configuration, and the assembly formed by the multiple battery cells 11 is accommodated in the battery case. Alternatively, the battery 100 may include multiple battery cells 11 first connected in series, in parallel, or in a mixed configuration to form battery modules, and multiple battery modules are then connected in series, in parallel, or in a mixed configuration to form an assembly, which is accommodated in the battery case. The battery 100 may also include other functional components, for example, the battery 100 may include a busbar configured to achieve electrical connection between multiple battery cells 11.

Each battery cell 11 may be a secondary battery or a primary battery, where a secondary battery refers to a battery cell 11 that can be recharged to activate the active material for continued use after the battery cell 11 is discharged, and a primary battery refers to a battery cell 11 that cannot be recharged to activate the active material for continued use after the electrical energy of the battery cell 11 is depleted. The battery cell 11 may alternatively be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, and the like, but is not limited thereto. The battery cell 11 may be a cylindrical battery cell, a prismatic battery cell, a pouch battery cell, or a battery cell 11 of other shapes. Prismatic battery cells include square-shell battery cells, blade-shaped battery cells, multi-prismatic battery cells, such as hexagonal prismatic battery cells, and the present application imposes no specific restrictions.

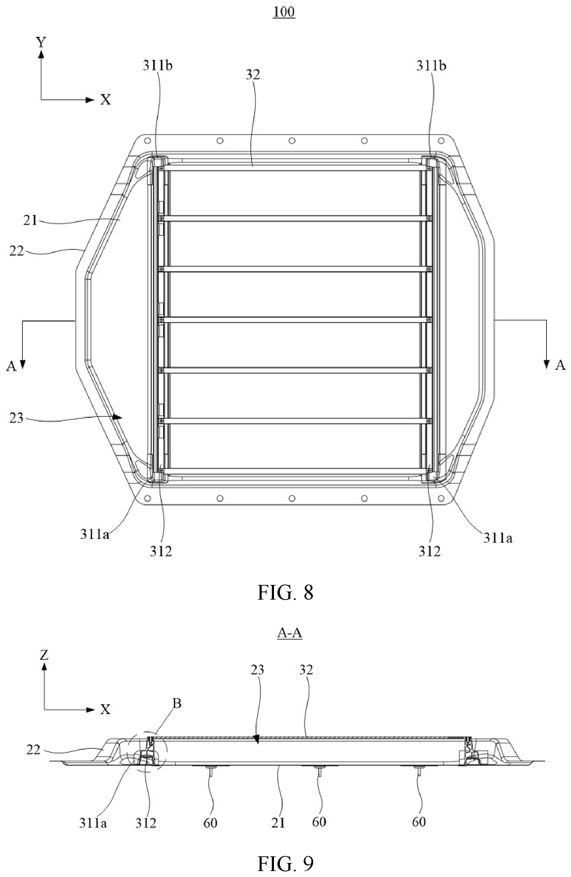

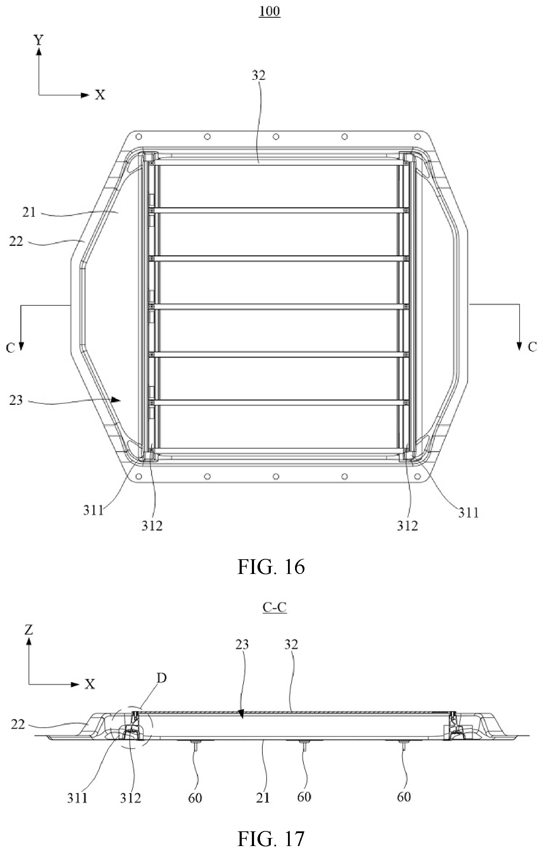

The battery 100 provided in this embodiment of the present application is described below with reference to the accompanying drawings. For convenience of description, the direction parallel to the central axis of the wheels 500 of the vehicle 1000 is defined as the width direction of the battery 100. It should be noted that the central axis of the wheels 500 refers to the central axis of the wheels 500 when the vehicle 1000 is traveling in a straight direction, as shown by the positive and negative directions of the Y-axis in FIGs. 1 to 6, FIG. 8, FIGs. 11 to 14, and FIG. 16. The direction perpendicular to the central axis of the wheels 500 and parallel to the support plane of the vehicle 1000 is defined as the length direction of the battery 100. It should be noted that the support plane refers to a plane tangent to the side of all wheels 500 of the vehicle 1000 facing away from the vehicle frame 200 when the vehicle 1000 is in a driving or stationary state, as shown by the positive and negative directions of the X-axis in FIGs. 1 to 18 and FIG. 20. The direction perpendicular to both the width direction and the length direction is defined as the height direction of the battery 100, as shown by the positive and negative directions of the Z-axis in FIGs. 2, 3, 6, 7, 9 to 11, 13 to 15, 17, 18, and 20. The direction from the battery 100 toward the support plane and perpendicular to the support plane is defined as the gravity direction of the battery 100, as shown by the negative direction of the Z-axis in FIGs. 2, 3, 6, 7, 9 to 11, 13 to 15, 17, 18, and 20.

According to a first aspect, referring to FIGs. 2, 3, and 11 together, an embodiment of the present application provides a battery 100, including a cell assembly 10, a case cover 20, and a constraining structure 30, where the case cover 20 is configured to be fixedly connected to the cell assembly 10, the case cover 20 has a cavity 23, the cavity 23 is configured to accommodate at least a portion of the cell assembly 10, the constraining structure 30 is configured to constrain the swelling of the cell assembly 10, and the constraining structure 30 is disposed on the case cover 20.

It should be noted that the case cover 20 and the constraining structure 30 may constitute the first part of the battery case or may constitute the second part of the battery case. In some embodiments, the battery 100 may further include a frame 40 and a guard plate 50, where the case cover 20, the frame 40, and the guard plate 50 are sequentially connected along the gravity direction of the battery 100. In other words, the case cover 20 covers one side of the frame 40 along the height direction of the battery 100, and the guard plate 50 covers the other side of the frame 40 along the height direction of the battery 100. The case cover 20 and the constraining structure 30 constitute the first part of the battery case, while the frame 40 and the guard plate 50 constitute the second part of the battery case. The case cover 20, the frame 40, and the guard plate 50 enclose the accommodating space, where the cavity 23 of the case cover 20 forms a part of the accommodating space, the cell assembly 10 is accommodated in the accommodating space, and at least a portion of the cell assembly 10 is accommodated in the cavity 23.

The case cover 20 covers one side of the frame 40 to seal one end opening of the accommodating space. The material of the case cover 20 may be, but is not limited to, aluminum, aluminum alloy, iron, stainless steel, or copper. The shape of the case cover 20 may be, but is not limited to, circular, rectangular, or square. In some embodiments, the case cover 20 may be an integrally formed component, to be specific, the case cover 20 is made using an integral forming process, for example, the case cover 20 is integrally formed by a stamping process. In some other embodiments, the case cover 20 may be a separately connected component, for example, the case cover 20 includes multiple parts that are separately formed and then connected to each other, where the connection method between the parts may be, but is not limited to, welding, fastening, or bonding, and the material of each part may be the same or different. The case cover 20 is connected to the frame 40, and the connection method between the case cover 20 and the frame 40 may be, but is not limited to, welding, bonding, or fastening.

The cell assembly 10 is connected to the case cover 20, and the connection method between the cell assembly 10 and the case cover 20 may be, but is not limited to, bonding, welding, or fastening.

In some embodiments, multiple battery cells 11 may be directly connected in series, in parallel, or in a mixed configuration, and the cell assembly 10 formed by the multiple battery cells 11 is accommodated in the battery case. The shell 111 is connected to the case cover 20, and the electrode terminal 113 is disposed on a portion of the shell 111 other than the portion used to connect to the case cover 20. For example, the electrode terminal 113 is disposed on a side of the shell 111 facing away from the case cover 20 along the height direction of the battery 100, in which case the battery cell 11 may be a square-shell battery cell, a cylindrical battery cell, or a prismatic battery cell. For another example, the electrode terminal 113 is disposed on one side or opposite sides of the shell 111 along the width direction of the battery 100, in which case the battery cell 11 may be a blade-shaped battery cell. For still another example, the electrode terminal 113 is disposed on one side or opposite sides of the shell 111 along the length direction of the battery 100, in which case the battery cell 11 may be a blade-shaped battery cell.

In some other embodiments, the battery 100 may include multiple battery cells 11 first connected in series, in parallel, or in a mixed configuration to form battery modules, and multiple battery modules are then connected in series, in parallel, or in a mixed configuration to form a cell assembly 10, which is accommodated in the battery case. The battery module includes an outer shell and an electrical lead-out, where multiple battery cells 11 are accommodated in the outer shell, and the electrical lead-out is directly or indirectly connected to the electrode terminal 113 of the battery cell 11 to output electrical energy from the battery cell 11 or input electrical energy to the battery cell 11. The outer shell is directly connected to the case cover 20, and the electrical lead-out is disposed on a portion of the outer shell other than the portion used to connect to the case cover 20. For example, the electrical lead-out is disposed on a side of the outer shell facing away from the case cover 20 along the height direction of the battery 100, for another example, the electrical lead-out is disposed on one side or opposite sides of the outer shell along the width direction of the battery 100, or on one side or opposite sides of the outer shell along the length direction of the battery 100.

The constraining structure 30 is a component configured to constrain the swelling of the cell assembly 10. It can be understood that, in a condition of swelling of the cell assembly 10, the swelling force generated by the cell assembly 10 acts on the constraining structure 30, and the constraining structure 30 can apply a counterforce to the cell assembly 10, which resists the swelling force of the cell assembly 10, thereby constraining the swelling of the cell assembly 10. The constraining structure 30 may be, but is not limited to, a clamping structure or a counteracting structure.

The frame 40 is a support component of the battery 100. The material of the frame 40 may be, but is not limited to, aluminum, aluminum alloy, iron, stainless steel, or copper. The shape of the frame 40 may be, but is not limited to, circular, rectangular, or square. In some embodiments, the frame 40 may include multiple parts that are separately formed and then connected to each other, where the connection method between the parts may be, but is not limited to, welding, fastening, or mortise-and-tenon connection, and the materials of the various parts may be the same or different.

The guard plate 50 is a protective component of the battery 100, where the guard plate 50 covers a side of the frame 40 facing away from the case cover 20 to seal an end opening of the accommodating space away from the case cover 20, thereby protecting the cell assembly 10. The material of the guard plate 50 may be, but is not limited to, aluminum, aluminum alloy, iron, stainless steel, or copper. The connection method between the guard plate 50 and the frame 40 may be, but is not limited to, welding, bonding, or fastening. In some embodiments, the guard plate 50 may be an integrally formed component, that is, the guard plate 50 is made using an integral forming process, such as, but not limited to, a die-casting process or a casting process. In some other embodiments, the guard plate 50 may be a separately connected component, for example, the guard plate 50 includes multiple parts that are separately formed and then connected to each other, where the connection method between the parts may be, but is not limited to, welding, or bonding, and the materials of the various parts may be the same or different.

In the battery 100 provided in this embodiment of the present application, the cell assembly 10 is accommodated in the cavity 23 of the case cover 20 and fixedly connected to the case cover 20, and the constraining structure 30 configured to constrain the swelling of the cell assembly 10 is disposed on the case cover 20. Compared to the conventional approach of disposing the cell assembly and the constraining structure within a frame of the battery, this arrangement can at least reduce the height dimension of the frame 40, thereby reducing the weight of the frame 40, effectively reducing the weight of the battery 100, increasing the mass energy density of the battery 100, and thus effectively improving the range performance of the electric device.

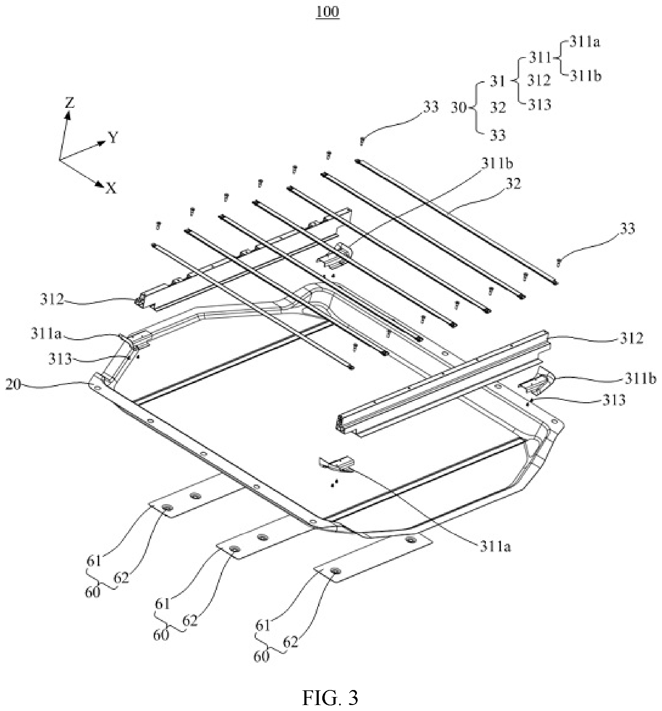

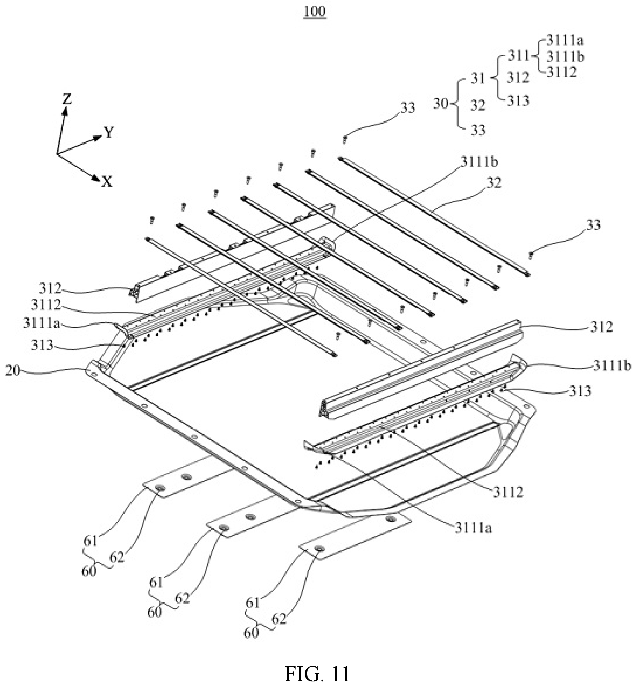

In some embodiments of the present application, referring to FIGs. 3 and 11 together, the constraining structure 30 includes two beam structures 31 spaced apart, where the two beam structures 31 cooperate to clamp the cell assembly 10.

In some embodiments, the beam structures 31 may be disposed in the cavity 23, where the two beam structures 31 are parallel and spaced apart from each other, and the cell assembly 10 is placed between the two beam structures 31, so that the two beam structures 31 can cooperate to clamp the cell assembly 10, thereby resisting the swelling force of the cell assembly 10. The material of the beam structures 31 may be, but is not limited to, aluminum, aluminum alloy, iron, stainless steel, or copper. It can be understood that the beam structures 31 may extend along the width direction of the battery 100, and in this condition, the two beam structures 31 are spaced apart along the length direction of the battery 100. Alternatively, the beam structures 31 may extend along the length direction of the battery 100, and in this condition, the two beam structures 31 are spaced apart along the width direction of the battery 100. In some embodiments, the beam structure 31 may be connected to the case cover 20, and the connection method between the beam structure 31 and the case cover 20 may be, but is not limited to, welding, fastening, or bonding.

By adopting the above technical solution, under the clamping action of the two beam structures 31, the swelling force of the cell assembly 10 can be resisted, thereby limiting the deformation of the cell assembly 10 caused by the swelling, and effectively improving the safety performance of the battery 100.

In some embodiments of the present application, referring to FIGs. 3, 4, 11, and 12 together, the case cover 20 includes a cover plate 21 and an enclosing structure 22 connected to the cover plate 21, where the enclosing structure 22 and the cover plate 21 enclose the cavity 23, and the beam structure 31 is connected to at least one of the cover plate 21 and the enclosing structure 22.

The enclosing structure 22 forms the peripheral wall of the case cover 20, the enclosing structure 22 defines the cavity 23 and encloses at least a portion of the cell assembly 10. One side of the enclosing structure 22 along the height direction of the battery 100 covers a side of the frame 40 facing away from the guard plate 50, and the cover plate 21 covers the other side of the enclosing structure 22 along the height direction of the battery 100 to seal one end opening of the accommodating space along the height direction of the battery 100. In some embodiments, the case cover 20 may be an integrally formed component, in other words, the enclosing structure 22 and the cover plate 21 are integrally formed, for example, the case cover 20 is a stamped part, that is, the enclosing structure 22 and the cover plate 21 are integrally formed by a stamping process. Under a condition that the case cover 20 is an integrally formed component, the material of the enclosing structure 22 and the material of the cover plate 21 may be the same, in other words, the case cover 20 can be made of a single material, for example, the case cover 20 may be made of aluminum alloy. In some other embodiments, the case cover 20 may be a separately connected component, in other words, the enclosing structure 22 and the cover plate 21 are formed separately and then connected to each other, for example, the enclosing structure 22 and the cover plate 21 are separately formed by a stamping process and then connected to each other, where the connection method between the enclosing structure 22 and the cover plate 21 may be, but is not limited to, welding, bonding, or fastening. Under a condition that the case cover 20 is a separately connected component, the material of the enclosing structure 22 and the material of the cover plate 21 may be the same, in other words, the case cover 20 can be made of a single material, for example, the case cover 20 may be made of aluminum alloy, or the material of the enclosing structure 22 and the material of the cover plate 21 may be different, for example, the enclosing structure 22 is made of aluminum alloy, and the cover plate 21 is made of stainless steel.

In some embodiments, the beam structure 31 is connected to the cover plate 21, and the connection method between the beam structure 31 and the cover plate 21 may be, but is not limited to, welding, bonding, or fastening.

In some other embodiments, the beam structure 31 is connected to the enclosing structure 22, where one end of the beam structure 31 is connected to one side of the enclosing structure 22, and another end of the beam structure 31 is connected to another side of the enclosing structure 22. The connection method between the beam structure 31 and the enclosing structure 22 may be, but is not limited to, welding, bonding, or fastening.

In yet some other embodiments, the beam structure 31 is connected to the cover plate 21, and the beam structure 31 is also connected to the enclosing structure 22.

The adoption of the above technical solution facilitates the installation operation of the beam structure 31, enabling the two beam structures 31 to more effectively clamp the cell assembly 10.

In some embodiments of the present application, referring to FIGs. 3 to 5, 8 to 13, and 16 to 18 together, the beam structure 31 includes an adapter 311 and a beam body 312, where the adapter 311 includes a matching portion 3111 and an installation portion 3112 connected to each other, the matching portion 3111 is shape-fitted and connected to at least a portion of an inner wall surface of the enclosing structure 22, and the beam body 312 is connected to the installation portion 3112.

The adapter 311 is a component configured to connect the case cover 20 and the beam body 312. The matching portion 3111 is the part connected to the enclosing structure 22 of the case cover 20, and the installation portion 3112 is the part connected to the beam body 312. The matching portion 3111 being shape-fitted to at least a portion of the inner wall of the enclosing structure 22 means that the shape of the side of the matching portion 3111 facing the enclosing structure 22 is consistent with the shape of at least a portion of the inner wall of the enclosing structure 22. In other words, under the condition that a portion of the inner wall of the enclosing structure 22 has surfaces of different shapes such as convex surfaces, curved surfaces, or corner surfaces, the side of the matching portion 3111 facing the enclosing structure 22 also has corresponding surface structures, where the shape of the surface structure of the side of the matching portion 3111 facing the enclosing structure 22 is the same as the shape of the surface structure of that portion of the inner wall of the enclosing structure 22, and the surface structure of the side of the matching portion 3111 facing the enclosing structure 22 can be complementarily fitted with the surface structure of that portion of the inner wall of the enclosing structure 22, so that the matching portion 3111 can be closely connected to that portion of the inner wall of the enclosing structure 22. In some embodiments, the adapter 311 may be an integrally formed component, in other words, the matching portion 3111 and the installation portion 3112 are integrally formed, for example, the adapter 311 is a stamped part, that is, the matching portion 3111 and the installation portion 3112 are integrally formed by a stamping process. Under the condition that the adapter 311 is an integrally formed component, the material of the matching portion 3111 and the material of the installation portion 3112 are the same, in other words, the adapter 311 is made of a single material, and the adapter 311 may be made of a single material, such as aluminum, aluminum alloy, iron, stainless steel, or copper. In some other embodiments, the adapter 311 may be a separately connected component, in other words, the matching portion 3111 and the mounting portion 3112 are formed separately and then connected to each other, for example, and the matching portion 3111 and the installation portion 3112 are separately formed by a stamping process and then connected to each other, and the connection method between the matching portion 3111 and the installation portion 3112 may be, but is not limited to, welding, bonding, and fastening. Under the condition that the adapter 311 is a separately connected component, the material of the matching portion 3111 and the material of the installation portion 3112 may be the same, in other words, the adapter 311 is made of a single material, and the adapter 311 may be made of a single material, such as aluminum, aluminum alloy, iron, stainless steel, or copper, or the material of the matching portion 3111 and the material of the installation portion 3112 may be different, for example, the matching portion 3111 is made of aluminum alloy, and the installation portion 3112 is made of stainless steel. The connection method between the matching portion 3111 and the enclosing structure 22 may be, but is not limited to, welding, bonding, or fastening.

The beam body 312 is the main component of the beam structure 31, and the beam body 312 is configured to abut against the cell assembly 10 to constrain the cell assembly 10. The beam body 312 may be a profile component, that is, the beam body 312 may be integrally formed by a linear extrusion process. The material of the beam body 312 may be, but is not limited to, aluminum, aluminum alloy, iron, stainless steel, or copper. The beam body 312 may extend along the width direction of the battery 100, that is, the length direction of the beam body 312 is parallel to the width direction of the battery 100, the width direction of the beam body 312 is parallel to the length direction of the battery 100, and the height direction of the beam body 312 is parallel to the height direction of the battery 100; alternatively, the beam body 312 may extend along the length direction of the battery 100, that is, the length direction of the beam body 312 is parallel to the length direction of the battery 100, the width direction of the beam body 312 is parallel to the width direction of the battery 100, and the height direction of the beam body 312 is parallel to the height direction of the battery 100. The connection method between the beam body 312 and the installation portion 3112 may be, but is not limited to, welding, bonding, or fastening.

In the related art, to adapt the shape of the case cover 20 to practical application requirements, the case cover 20 is typically formed by a stamping process, so that the enclosing structure 22 of the case cover 20 can have an irregular shape according to different application needs. However, the beam body 312 is typically a profile component, that is, the beam body 312 is formed by a linear extrusion process, making it difficult for the end shape of the beam body 312 to match the shape of the enclosing structure 22 of the case cover 20. As a result, the beam body 312 can only be connected to the cover plate 21 of the case cover 20, but it is difficult to connect two ends of the beam body 312 to the enclosing structure 22 of the case cover 20, leading to relatively low connection strength between the beam body 312 and the case cover 20, and making the beam body 312 prone to deformation or displacement under the swelling force of the cell assembly 10 or other external forces, which is not conducive to improving the reliability of the battery 100.

By adopting the above technical solution, since the matching portion 3111 of the adapter 311 can be shape-fitted and connected to at least a portion of the inner wall surface of the enclosing structure 22, and the beam body 312 is connected to the installation portion 3112 of the adapter 311, the beam body 312 can be connected to the enclosing structure 22 through the adapter 311, facilitating the assembly of the beam body 312, effectively improving the connection strength between the beam body 312 and the case cover 20, thereby effectively reducing the risk of deformation or displacement of the beam body 312, and effectively improving the reliability of the battery 100.

It can be understood that the material of the case cover 20, the material of the adapter 311, and the material of the beam body 312 may be the same or different.

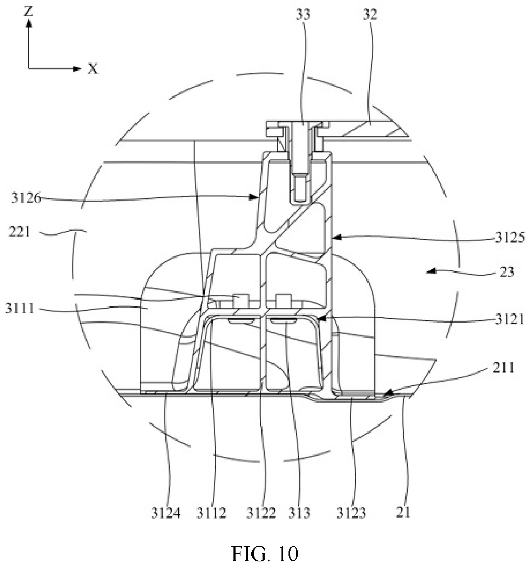

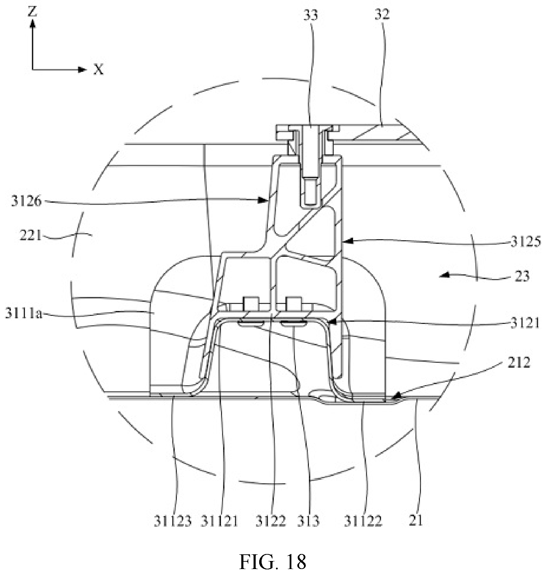

In some embodiments, referring to FIGs. 10 and 18 together, the material of the case cover 20 and the material of the adapter 311 are the same, while the material of the beam body 312 is different from that of the case cover 20, for example, the material of the case cover 20 and the material of the adapter 311 are steel, and the material of the beam body 312 is aluminum. The adapter 311 is welded to the case cover 20, and the beam structure 31 further includes a first fastener 313, where the beam body 312 is connected to the installation portion 3112 through the first fastener 313. The first fastener 313 may be, but is not limited to, a bolt, a screw, or a rivet.

In the related art, under a condition that the case cover 20 is formed by a stamping process, the thickness of the wall of the case cover 20 is relatively small. To improve the structural strength of the case cover 20, the case cover 20 is typically made of high-strength steel. However, since the beam body 312 needs to resist the swelling force of the cell assembly 10, the beam body 312 is typically made of aluminum with a cavity structure. Since steel and aluminum are difficult to weld effectively, it is challenging to effectively connect the beam body 312 to the case cover 20, resulting in poor connection strength.

By adopting the above technical solution, since the material of the case cover 20 and the material of the adapter 311 are the same, the adapter 311 is welded to the case cover 20, while the material of the beam body 312 is different from that of the case cover 20, and the beam body 312 is connected to the installation portion 3112 through the first fastener 313, enabling the beam body 312 to be connected to the case cover 20 through the adapter 311, facilitating the assembly of the beam body 312, effectively improving the connection strength between the beam body 312 and the case cover 20, thereby effectively reducing the risk of deformation or displacement of the beam body 312, and effectively improving the reliability of the battery 100.

In some other embodiments, referring to FIGs. 3, 10, 11, and 18 together, the material of the case cover 20 and the material of the adapter 311 are the same, while the material of the beam body 312 is different from that of the case cover 20, for example, the material of the case cover 20 and the material of the adapter 311 are steel, and the material of the beam body 312 is aluminum. The case cover 20 and the adapter 311 are stamped parts, that is, the case cover 20 and the adapter 311 are formed by a stamping process, and the beam body 312 is a profile component, that is, the beam body 312 is formed by a linear extrusion process. The matching portion 3111 of the adapter 311 is shape-fitted and welded to at least a portion of the inner wall of the enclosing structure 22 of the case cover 20, and the beam structure 31 further includes a first fastener 313, where the beam body 312 is connected to the installation portion 3112 through the first fastener 313.

By adopting the above technical solution, since the material of the case cover 20 and the material of the adapter 311 are the same, the matching portion 3111 of the adapter 311 is shape-fitted and welded to at least a portion of the inner wall of the enclosing structure 22 of the case cover 20, while the material of the beam body 312 is different from that of the case cover 20, and the beam body 312 is connected to the installation portion 3112 through the first fastener 313, enabling the beam body 312 to be connected to the enclosing structure 22 of the case cover 20 through the adapter 311, facilitating the assembly of the beam body 312, effectively improving the connection strength between the beam body 312 and the case cover 20, thereby effectively reducing the risk of deformation or displacement of the beam body 312, and effectively improving the reliability of the battery 100.

In yet some other embodiments, the material of the case cover 20, the material of the adapter 311, and the material of the beam body 312 are the same, for example, the material of the case cover 20, the material of the adapter 311, and the material of the beam body 312 are aluminum, for another example, the material of the case cover 20, the material of the adapter 311, and the material of the beam body 312 are steel. The case cover 20 and the adapter 311 are stamped parts, that is, the case cover 20 and the adapter 311 are formed by a stamping process, and the beam body 312 is a profile component, that is, the beam body 312 is formed by a linear extrusion process. The matching portion 3111 of the adapter 311 is shape-fitted and welded to at least a portion of the inner wall of the enclosing structure 22 of the case cover 20, and the beam body 312 is welded to the installation portion 3112.

By adopting the above technical solution, since the material of the case cover 20, the material of the adapter 311, and the material of the beam body 312 are the same, the matching portion 3111 of the adapter 311 is shape-fitted and welded to at least a portion of the inner wall of the enclosing structure 22 of the case cover 20, and the beam body 312 is welded to the installation portion 3112, enabling the beam body 312 to be connected to the enclosing structure 22 of the case cover 20 through the adapter 311, facilitating the assembly of the beam body 312, effectively improving the connection strength between the beam body 312 and the case cover 20, thereby effectively reducing the risk of deformation or displacement of the beam body 312, and effectively improving the reliability of the battery 100.

Of course, in some other embodiments, the adapter 311 may not be provided, and the beam body 312 is directly connected to the case cover 20. For example, the material of the case cover 20 and the material of the beam body 312 are the same, and the beam body 312 is directly welded to the case cover 20. For another example, the material of the case cover 20 and the material of the beam body 312 are different, and the beam body 312 is connected to the case cover 20 through fasteners.

In some embodiments of the present application, referring to FIGs. 3 to 5 and 8 to 10 together, the enclosing structure 22 includes a first wall 221 and a second wall 222 that are arranged opposite each other, and the adapter 311 includes a first adapter 311a and a second adapter 311b, where the matching portion 3111 of the first adapter 311a is shape-fitted and connected to at least a portion of an inner wall surface of the first wall 221, the matching portion 3111 of the second adapter 311b is shape-fitted and connected to at least a portion of an inner wall surface of the second wall 222, one end of the beam body 312 is connected to the installation portion 3112 of the first adapter 311a, and the other end of the beam body 312 is connected to the installation portion 3112 of the second adapter 311b.

The first wall 221 and the second wall 222 are two oppositely disposed walls of the enclosing structure 22. In some embodiments, the first wall 221 and the second wall 222 may be two walls of the enclosing structure 22 oppositely disposed along the width direction of the battery 100, and the beam body 312 extends along the width direction of the battery 100. The matching portion 3111 of the first adapter 311a is connected to the first wall 221, the installation portion 3112 of the first adapter 311a is connected to the matching portion 3111 of the first adapter 311a, one end of the beam body 312 is connected to the installation portion 3112 of the first adapter 311a, the matching portion 3111 of the second adapter 311b is connected to the second wall 222, the installation portion 3112 of the second adapter 311b is connected to the matching portion 3111 of the second adapter 311b, and the other end of the beam body 312 is connected to the installation portion 3112 of the second adapter 311b. In some other embodiments, the first wall 221 and the second wall 222 may be two walls of the enclosing structure 22 oppositely disposed along the length direction of the battery 100, and the beam body 312 extends along the length direction of the battery 100. The matching portion 3111 of the first adapter 311a is connected to the first wall 221, the installation portion 3112 of the first adapter 311a is connected to the matching portion 3111 of the first adapter 311a, one end of the beam body 312 is connected to the installation portion 3112 of the first adapter 311a, the matching portion 3111 of the second adapter 311b is connected to the second wall 222, the installation portion 3112 of the second adapter 311b is connected to the matching portion 3111 of the second adapter 311b, and the other end of the beam body 312 is connected to the installation portion 3112 of the second adapter 311b.

By adopting the above technical solution, two ends of the beam body 312 can be both connected to the enclosing structure 22 through the adapters 311, further improving the connection strength between the beam body 312 and the case cover 20, thereby further reducing the risk of deformation or displacement of the beam body 312.

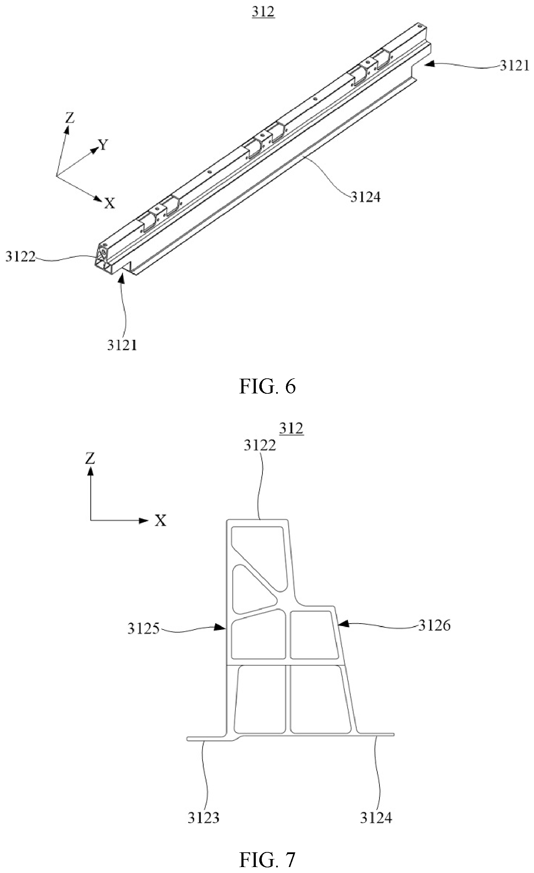

In some embodiments of the present application, referring to FIGs. 6 and 10 together, two ends of the beam body 312 are each provided with an installation cavity 3121, where the installation portion 3112 of the first adapter 311a is embedded in one installation cavity 3121, and the installation portion 3112 of the second adapter 311b is embedded in the other installation cavity 3121.

The installation cavity 3121 is configured to provide a connection space for the beam body 312 and the installation portion 3112. The installation cavity 3121 penetrates through an end of the beam body 312 to form an opening, and the installation portion 3112 can enter the installation cavity 3121 through the opening and connect to the beam body 312. The installation cavity 3121 may alternatively penetrate through one or both sides of the beam body 312 along the width direction, or the installation cavity 3121 may penetrate through one or both sides of the beam body 312 along the height direction.

In some embodiments, the shape of the installation portion 3112 of the first adapter 311a may be consistent with the shape of the corresponding installation cavity 3121, so that the outer wall of the installation portion 3112 of the first adapter 311a can fit closely with the cavity wall of the corresponding installation cavity 3121, thereby effectively restricting the relative positions of the installation portion 3112 of the first adapter 311a and the beam body 312, and further reducing the risk of deformation or displacement of the beam body 312. Similarly, the shape of the installation portion 3112 of the second adapter 311b may be consistent with the shape of the corresponding installation cavity 3121, so that the outer wall of the installation portion 3112 of the second adapter 311b can fit closely with the cavity wall of the corresponding installation cavity 3121, thereby effectively restricting the relative positions of the installation portion 3112 of the second adapter 311b and the beam body 312, and further reducing the risk of deformation or displacement of the beam body 312.

By adopting the above technical solution, the installation portion 3112 of the first adapter 311a and the installation portion 3112 of the second adapter 311b can be disposed in the installation cavities 3121 of the beam body 312, effectively improving the integration degree between the installation portion 3112 of the first adapter 311a, the installation portion 3112 of the second adapter 311b, and the beam body 312, making a connection structure between the beam body 312 and the first adapter 311a and a connection structure between the beam body 312 and the second adapter 311b more compact, effectively reducing the space occupied by the connection structure between the beam body 312 and the first adapter 311a and the connection structure between the beam body 312 and the second adapter 311b, thereby effectively increasing the volumetric energy density of the battery 100.

In some embodiments of the present application, referring to FIG. 10, the beam body 312 is connected to the cover plate 21.

The connection method between the beam body 312 and the cover plate 21 may be, but is not limited to, welding, bonding, or fastening.

By adopting the above technical solution, the connection strength between the beam body 312 and the case cover 20 is further improved, thereby further reducing the risk of deformation or displacement of the beam body 312.

In some embodiments of the present application, referring to FIGs. 6, 7, and 10 together, the beam body 312 includes a first main body 3122 and a first flange 3123, where one end of the first main body 3122 is connected to the installation portion 3112 of the first adapter 311a, another end of the first main body 3122 is connected to the installation portion 3112 of the second adapter 311b, the first flange 3123 is connected to a side of the first main body 3122 along a width direction of the beam body 312, and the first flange 3123 is connected to the cover plate 21.

The first main body 3122 is the main part of the beam body 312, and configured to connect to the installation portion 3112 of the first adapter 311a and the installation portion 3112 of the second adapter 311b. It can be understood that, under a condition that two ends of the beam body 312 are each provided with an installation cavity 3121, the installation cavities 3121 are provided at two ends of the first main body 3122.

The first flange 3123 is a part configured to connect to the cover plate 21, where the length direction of the first main body 3122 is parallel to the length direction of the first flange 3123. The first flange 3123 is connected to a side of the first main body 3122 along the width direction of the beam body 312, in other words, the first flange 3123 protrudes outward from a side of the first main body 3122 along the width direction of the beam body 312. The first flange 3123 has a first connection surface for connecting to the cover plate 21, where the first connection surface is parallel to the surface of the cover plate 21. The connection method between the first flange 3123 and the cover plate 21 may be, but is not limited to, welding, bonding, or fastening.

By adopting the above technical solution, the connection area between the beam body 312 and the cover plate 21 is effectively increased, further improving the connection strength between the beam body 312 and the case cover 20, thereby further reducing the risk of deformation or displacement of the beam body 312.

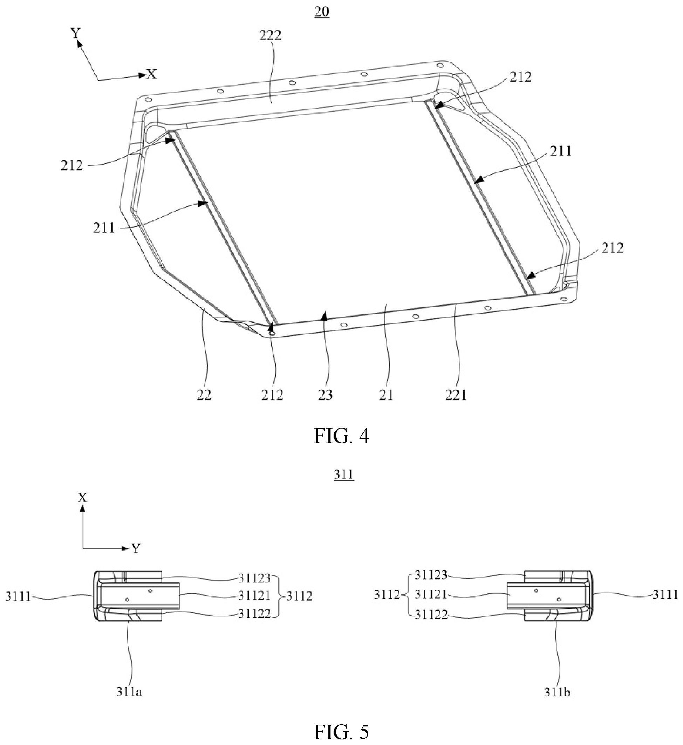

In some embodiments of the present application, referring to FIGs. 4, 7, and 10 together, the first flange 3123 is connected to a side of the first main body 3122 facing the cell assembly 10, the cover plate 21 is provided with a first groove 211, the first flange 3123 is connected to a bottom of the first groove 211, and a depth of the first groove 211 is greater than or equal to a thickness of the first flange 3123.

The first flange 3123 is connected to a side of the first main body 3122 facing the cell assembly 10, in other words, the first flange 3123 protrudes outward from a side of the first main body 3122 facing the cell assembly 10.

The first groove 211 is configured to provide an avoidance space for the first flange 3123 to avoid the cell assembly 10, where the first groove 211 is recessed on a surface of the cover plate 21 facing the beam body 312. It can be understood that the first groove 211 is a strip-shaped groove, and the length direction of the first groove 211 is parallel to the length direction of the first flange 3123. The bottom of the first groove 211 refers to the lowest height position of the first groove 211 in the height direction of the battery 100. The depth of the first groove 211 refers to the dimension of the first groove 211 along the height direction of the battery 100, and the thickness of the first flange 3123 refers to the dimension of the first flange 3123 along the height direction of the battery 100. The depth of the first groove 211 is greater than or equal to the thickness of the first flange 3123, in other words, when the first flange 3123 is connected to the bottom of the first groove 211, the first flange 3123 does not protrude out of the first groove 211 along the height direction of the battery 100, so that when some battery cells 11 in the cell assembly 10 are positioned directly opposite the first flange 3123, the first flange 3123 does not lift these battery cells 11.

By adopting the above technical solution, the first groove 211 provides an avoidance space for the first flange 3123 to avoid the cell assembly 10, thereby effectively alleviating the mutual interference between the first flange 3123 and the cell assembly 10.

In some embodiments of the present application, referring to FIGs. 6, 7, and 10 together, the beam body 312 further includes a second flange 3124, where the second flange 3124 is connected to a side of the first main body 3122 facing away from the cell assembly 10, and the second flange 3124 is connected to the cover plate 21.

The second flange 3124 is a part configured to connect to the cover plate 21, where the length direction of the first main body 3122, the length direction of the first flange 3123, and the length direction of the second flange 3124 are parallel. The second flange 3124 is connected to a side of the first main body 3122 facing away from the cell assembly 10, in other words, the second flange 3124 protrudes outward from a side of the first main body 3122 facing away from the cell assembly 10. The second flange 3124 has a second connection surface for connecting to the cover plate 21, where the second connection surface is parallel to the surface of the cover plate 21. The connection method between the second flange 3124 and the cover plate 21 may be, but is not limited to, welding, bonding, or fastening.

By adopting the above technical solution, the connection area between the beam body 312 and the cover plate 21 is further increased, further improving the connection strength between the beam body 312 and the case cover 20, thereby further reducing the risk of deformation or displacement of the beam body 312.

In some embodiments of the present application, the beam body 312 is welded to the cover plate 21.

The welding method between the beam body 312 and the cover plate 21 may be, but is not limited to, arc welding, laser welding, ultrasonic welding, or brazing.

In some embodiments, to improve the welding stability between the beam body 312 and the cover plate 21, at least a portion of the material of the beam body 312 is the same as at least a portion of the material of the cover plate 21. For example, under a condition that the beam body 312 includes the first flange 3123 and the second flange 3124, the material of the first flange 3123, the material of the second flange 3124, and the material of the cover plate 21 are aluminum alloy, and the first flange 3123 and the second flange 3124 are welded to the cover plate 21; for another example, the overall material of the beam body 312 and the overall material of the cover plate 21 are aluminum alloy, and the beam body 312 is welded to the cover plate 21.

By adopting the above technical solution, the beam body 312 can be connected to the cover plate 21 without the need to additionally provide connection holes on the cover plate 21, effectively improving the sealing performance of the battery 100 and effectively simplifying the assembly process of the beam body 312 and the cover plate 21, thereby effectively improving the assembly efficiency of the battery 100.

In some embodiments of the present application, referring to FIGs. 11 to 13 together, the enclosing structure 22 includes a first wall 221 and a second wall 222 that are arranged opposite each other, and the matching portion 3111 includes a first matching portion 3111a and a second matching portion 3111b, where the first matching portion 3111a is shape-fitted and connected to at least a portion of an inner wall surface of the first wall 221, the second matching portion 3111b is shape-fitted and connected to at least a portion of an inner wall surface of the second wall 222, one end of the installation portion 3112 is connected to the first matching portion 3111a, another end of the installation portion 3112 is connected to the second matching portion 3111b, and the beam body 312 extends in a direction from the first matching portion 3111a toward the second matching portion 3111b.

It can be understood that, in this embodiment, the installation portion 3112 has a strip-like structure, and the length direction of the installation portion 3112 and the length direction of the beam body 312 are in the direction from the first matching portion 3111a to the second matching portion 3111b, meaning that the length direction of the installation portion 3112 is parallel to the length direction of the beam body 312.

The first wall 221 and the second wall 222 are two oppositely disposed walls of the enclosing structure 22. In some embodiments, the first wall 221 and the second wall 222 may be two walls of the enclosing structure 22 oppositely disposed along the width direction of the battery 100, the first matching portion 3111a is connected to the first wall 221, the second matching portion 3111b is connected to the second wall 222, the installation portion 3112 and the beam body 312 extend along the width direction of the battery 100, one end of the installation portion 3112 is connected to the first matching portion 3111a, another end of the installation portion 3112 is connected to the second matching portion 3111b, and the beam body 312 is connected to the installation portion 3112. In some other embodiments, the first wall 221 and the second wall 222 may be two walls of the enclosing structure 22 oppositely disposed along the length direction of the battery 100, the first matching portion 3111a is connected to the first wall 221, the second matching portion 3111b is connected to the second wall 222, the installation portion 3112 and the beam body 312 extend along the length direction of the battery 100, one end of the installation portion 3112 is connected to the first matching portion 3111a, another end of the installation portion 3112 is connected to the second matching portion 3111b, and the beam body 312 is connected to the installation portion 3112.

By adopting the above technical solution, one end of the installation portion 3112 can be connected to the enclosing structure 22 through the first matching portion 3111a, and another end of the installation portion 3112 can be connected to the enclosing structure 22 through the second matching portion 3111b, effectively improving the connection strength between the installation portion 3112 and the case cover 20. Since the beam body 312 extends in the direction from the first matching portion 3111a toward the second matching portion 3111b, connecting the beam body 312 to the installation portion 3112 can enhance the connection strength between the beam body 312 and the case cover 20, thereby further reducing the risk of deformation or displacement of the beam body 312.

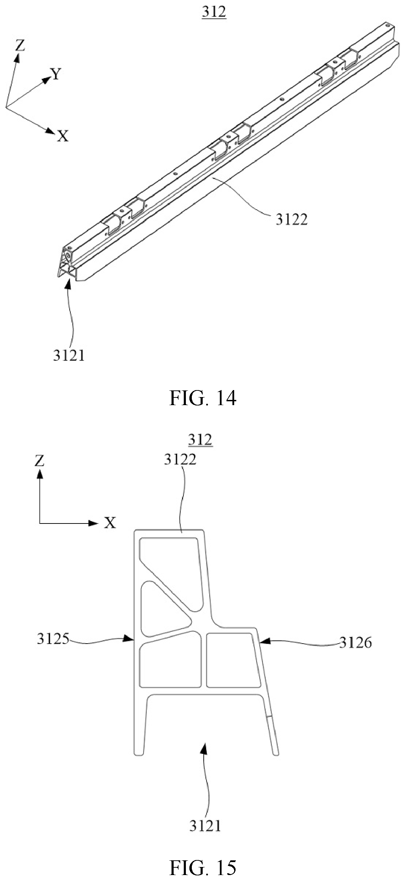

In some embodiments of the present application, referring to FIGs. 14, 15, and 16 to 18 together, the beam body 312 is provided with an installation cavity 3121, and the installation portion 3112 is embedded in the installation cavity 3121.

In some embodiments, the installation cavity 3121 may be provided at the bottom of the beam body 312, where the bottom of the beam body 312 refers to the lowest height position of the beam body 312 in the height direction of the battery 100, and the bottom of the beam body 312 is recessed along the height direction of the battery 100 to form the installation cavity 3121. It can be understood that, under a condition that the beam body 312 includes the first main body 3122, the installation cavity 3121 may be provided at the bottom of the first main body 3122.

In some embodiments, the shape of the installation portion 3112 may be consistent with the shape of the installation cavity 3121, so that the outer wall of the installation portion 3112 can fit closely with the cavity wall of the installation cavity 3121, thereby effectively restricting the relative positions of the installation portion 3112 and the beam body 312, and further reducing the risk of deformation or displacement of the beam body 312.

By adopting the above technical solution, the installation portion 3112 can be disposed in the installation cavity 3121 of the beam body 312, effectively improving the integration degree between the installation portion 3112 and the beam body 312, making a connection structure between the beam body 312 and the adapter 311 more compact, and effectively reducing the space occupied by the connection structure between the beam body 312 and the adapter 311, thereby effectively increasing the volumetric energy density of the battery 100.

In some embodiments of the present application, referring to FIG. 18, the installation portion 3112 is connected to the cover plate 21.

The connection method between the installation portion 3112 and the cover plate 21 may be, but is not limited to, welding, bonding, or fastening.

By adopting the above technical solution, the connection strength between the adapter 311 and the case cover 20 is effectively improved, and connecting the beam body 312 to the installation portion 3112 can enhance the connection strength between the beam body 312 and the case cover 20, thereby further reducing the risk of deformation or displacement of the beam body 312.

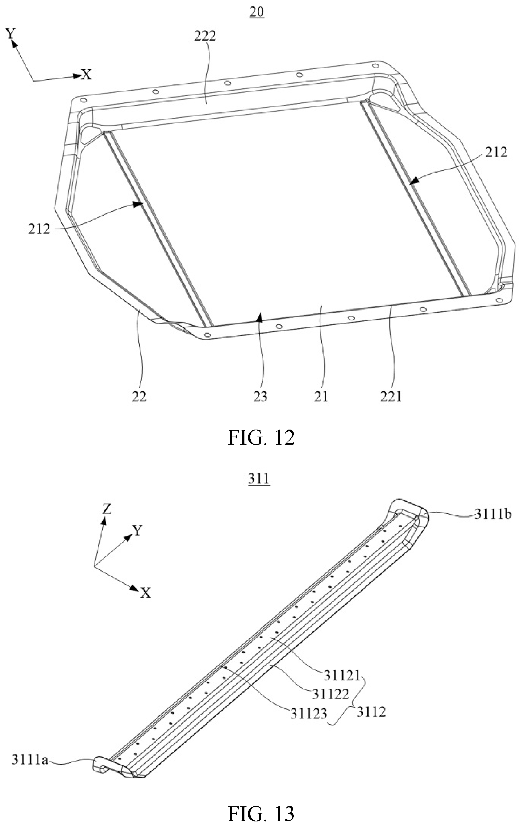

In some embodiments of the present application, referring to FIGs. 13 and 18 together, the installation portion 3112 includes a second main body 31121 and a third flange 31122, where the beam body 312 is installed on the second main body 31121, and the third flange 31122 is connected between the second main body 31121 and the cover plate 21.

The second main body 31121 is the main part of the installation portion 3112, and configured to connect to the beam body 312, and the third flange 31122 is the part configured to connect to the cover plate 21, where the length direction of the second main body 31121 is parallel to the length direction of the third flange 31122.

The third flange 31122 may be connected to a side of the second main body 31121 along the width direction of the installation portion 3112, in other words, the third flange 31122 protrudes outward from a side of the second main body 31121 along the width direction of the installation portion 3112. It should be noted that the width direction of the installation portion 3112 is parallel to the width direction of the beam body 312. The third flange 31122 has a third connection surface for connecting to the cover plate 21, where the third connection surface is parallel to the surface of the cover plate 21. The connection method between the third flange 31122 and the cover plate 21 may be, but is not limited to, welding, bonding, or fastening.

By adopting the above technical solution, the connection area between the installation portion 3112 and the cover plate 21 is effectively increased, further improving the connection strength between the adapter 311 and the case cover 20, and connecting the beam body 312 to the installation portion 3112 can enhance the connection strength between the beam body 312 and the case cover 20, thereby further reducing the risk of deformation or displacement of the beam body 312.

In some embodiments of the present application, referring to FIGs. 4, 5, 12, 13, and 18 together, the third flange 31122 is connected to a side of the second main body 31121 facing the cell assembly 10, the cover plate 21 is provided with a second groove 212, the third flange 31122 is connected to a bottom of the second groove 212, and a depth of the second groove 212 is greater than or equal to a thickness of the third flange 31122.

The third flange 31122 is connected to a side of the second main body 31121 facing the cell assembly 10, in other words, the third flange 31122 protrudes outward from a side of the second main body 31121 facing the cell assembly 10.

The second groove 212 is configured to provide an avoidance space for the third flange 31122 to avoid the cell assembly 10, where the second groove 212 is recessed on a surface of the cover plate 21 facing the installation portion 3112. It can be understood that the second groove 212 is a strip-shaped groove, and the length direction of the second groove 212 is parallel to the length direction of the third flange 31122. The bottom of the second groove 212 refers to the lowest height position of the second groove 212 in the height direction of the battery 100. The depth of the second groove 212 refers to the dimension of the second groove 212 along the height direction of the battery 100, and the thickness of the third flange 31122 refers to the dimension of the third flange 31122 along the height direction of the battery 100. The depth of the second groove 212 is greater than or equal to the thickness of the third flange 31122, in other words, when the third flange 31122 is connected to the bottom of the second groove 212, the third flange 31122 does not protrude out of the second groove 212 along the height direction of the battery 100, so that when some battery cells 11 in the cell assembly 10 are positioned directly opposite the third flange 31122, the third flange 31122 does not lift these battery cells 11.

By adopting the above technical solution, the second groove 212 provides an avoidance space for the third flange 31122 to avoid the cell assembly 10, thereby effectively alleviating the mutual interference between the third flange 31122 and the cell assembly 10.

In some embodiments of the present application, referring to FIGs. 5, 13, and 18 together, the installation portion 3112 further includes a fourth flange 31123, where the fourth flange 31123 is connected to a side of the second main body 31121 facing away from the cell assembly 10, and the fourth flange 31123 is connected to the cover plate 21.

The fourth flange 31123 is a part configured to connect to the cover plate 21, where the length direction of the second main body 31121, the length direction of the third flange 31122, and the length direction of the fourth flange 31123 are parallel. The fourth flange 31123 is connected to a side of the second main body 31121 facing away from the cell assembly 10, in other words, the fourth flange 31123 protrudes outward from a side of the second main body 31121 facing away from the cell assembly 10. The fourth flange 31123 has a fourth connection surface for connecting to the cover plate 21, where the fourth connection surface is parallel to the surface of the cover plate 21. The connection method between the fourth flange 31123 and the cover plate 21 may be, but is not limited to, welding, bonding, or fastening.

By adopting the above technical solution, the connection area between the installation portion 3112 and the cover plate 21 is further increased, further improving the connection strength between the adapter 311 and the case cover 20, and connecting the beam body 312 to the installation portion 3112 can enhance the connection strength between the beam body 312 and the case cover 20, thereby further reducing the risk of deformation or displacement of the beam body 312.

In some embodiments of the present application, referring to FIGs. 4 to 7 and 10 together, under a condition that the adapter 311 includes a first adapter 311a and a second adapter 311b, the number of second grooves 212 is two, where the third flange 31122 of the installation portion 3112 of the first adapter 311a is connected to the bottom of one second groove 212, and the third flange 31122 of the installation portion 3112 of the second adapter 311b is connected to the bottom of the other second groove 212. Under a condition that the cover plate 21 is provided with a first groove 211, one of the second grooves 212 may be connected to one end of the first groove 211, and the other second groove 212 may be connected to another end of the first groove 211, so that the first groove 211 and the two second grooves 212 form a continuous linear groove. Thus, only a linear groove needs to be provided on the cover plate 21, where the head section of the linear groove serves as one of the second grooves 212, the middle section of the linear groove serves as the first groove 211, and the tail section of the linear groove serves as the other second groove 212, thereby effectively simplifying the forming process of the first groove 211 and the second grooves 212. Under a condition that the beam body 312 includes the second flange 3124, the fourth flange 31123 of the installation portion 3112 of the first adapter 311a is located at one end side of the second flange 3124, and the fourth flange 31123 of the installation portion 3112 of the second adapter 311b is located at another end side of the second flange 3124.

In some embodiments of the present application, referring to FIGs. 12 to 15 and 18 together, under a condition that the matching portion 3111 includes a first matching portion 3111a and a second matching portion 3111b, and one end of the installation portion 3112 is connected to the first matching portion 3111a and another end of the installation portion 3112 is connected to the second matching portion 3111b, the third flange 31122 is connected to a side of the second main body 31121 facing the cell assembly 10, the fourth flange 31123 is connected to a side of the second main body 31121 facing away from the cell assembly 10, and the beam body 312 may be installed on the second main body 31121 but not directly connected to the cover plate 21, meaning that the beam body 312 may not include the first flange 3123 and the second flange 3124. Thus, only the second groove 212 needs to be provided on the cover plate 21, the third flange 31122 is connected to the bottom of the second groove 212, and the fourth flange 31123 is connected to the cover plate 21.

In some embodiments of the present application, the installation portion 3112 is welded to the cover plate 21.

The welding method between the installation portion 3112 and the cover plate 21 may be, but is not limited to, arc welding, laser welding, ultrasonic welding, or brazing.

In some embodiments, to improve the welding stability between the installation portion 3112 and the cover plate 21, at least a portion of the material of the installation portion 3112 is the same as at least a portion of the material of the cover plate 21. For example, under a condition that the installation portion 3112 includes the third flange 31122 and the fourth flange 31123, the material of the third flange 31122, the material of the fourth flange 31123, and the material of the cover plate 21 are aluminum alloy, and the third flange 31122 and the fourth flange 31123 are welded to the cover plate 21. For another example, the overall material of the installation portion 3112 and the overall material of the cover plate 21 are aluminum alloy, and the installation portion 3112 is welded to the cover plate 21.

By adopting the above technical solution, the installation portion 3112 can be connected to the cover plate 21 without the need to additionally provide connection holes on the cover plate 21, effectively improving the sealing performance of the battery 100 and effectively simplifying the assembly process of the installation portion 3112 and the cover plate 21, thereby effectively improving the assembly efficiency of the battery 100.

In some embodiments of the present application, under a condition that the adapter 311 includes a first adapter 311a and a second adapter 311b, the material of the case cover 20, the material of the first adapter 311a, the material of the second adapter 311b, and the material of the beam body 312 are the same, for example, the material of the case cover 20, the material of the first adapter 311a, the material of the second adapter 311b, and the material of the beam body 312 are aluminum. The case cover 20, the first adapter 311a, and the second adapter 311b are each integrally formed by a stamping process, and the beam body 312 is integrally formed by a linear extrusion process. The matching portion 3111 of the first adapter 311a is shape-fitted and welded to at least a portion of an inner wall surface of the first wall 221 of the enclosing structure 22, the matching portion 3111 of the second adapter 311b is shape-fitted and welded to at least a portion of an inner wall surface of the second wall 222 of the enclosing structure 22, the third flange 31122 and the fourth flange 31123 of the installation portion 3112 are welded to the cover plate 21, one end of the first main body 3122 of the beam body 312 is installed on the second main body 31121 of the installation portion 3112 of the first adapter 311a, another end of the first main body 3122 of the beam body 312 is installed on the second main body 31121 of the installation portion 3112 of the second adapter 311b, and the first flange 3123 and the second flange 3124 of the beam body 312 are welded to the cover plate 21, thereby effectively improving the connection strength between the beam body 312 and the case cover 20, effectively reducing the risk of deformation or displacement of the beam body 312, and effectively improving the reliability of the battery 100.

In some embodiments of the present application, under a condition that the matching portion 3111 includes a first matching portion 3111a and a second matching portion 3111b, and the installation portion 3112 is connected between the first matching portion 3111a and the second matching portion 3111b, the material of the case cover 20 and the material of the adapter 311 are the same, while the material of the case cover 20 and the material of the beam body 312 are different, for example, the material of the case cover 20 and the material of the adapter 311 are steel, and the material of the beam body 312 is aluminum. The case cover 20 and the adapter 311 are each integrally formed by a stamping process, and the beam body 312 is integrally formed by a linear extrusion process. The first matching portion 3111a is shape-fitted and welded to at least a portion of an inner wall surface of the first wall 221 of the enclosing structure 22, the second matching portion 3111b is shape-fitted and welded to at least a portion of an inner wall surface of the second wall 222 of the enclosing structure 22, the third flange 31122 and the fourth flange 31123 of the installation portion 3112 are welded to the cover plate 21, and the beam body 312 is connected to the second main body 31121 of the installation portion 3112, thereby effectively improving the connection strength between the beam body 312 and the case cover 20, effectively reducing the risk of deformation or displacement of the beam body 312, and effectively improving the reliability of the battery 100.

In some embodiments of the present application, referring to FIGs. 7, 10, 15, and 18 together, the beam body 312 has a support surface 3126 and an abutment surface 3125, where the support surface 3126 is disposed facing away from the cell assembly 10, and the abutment surface 3125 is disposed opposite to the cell assembly 10 and configured to abut against the cell assembly 10 to resist the swelling force of the cell assembly 10.

It can be understood that, under a condition that the beam body 312 includes the first main body 3122, the support surface 3126 and the abutment surface 3125 are respectively disposed on two sides of the first main body 3122 along the width direction of the beam body 312. The support surface 3126 may be a plane perpendicular to the surface of the cover plate 21, may be an inclined plane relative to the surface of the cover plate 21, or may be a curved surface or other irregular surface structures. Similarly, the abutment surface 3125 may be a plane perpendicular to the surface of the cover plate 21, may be an inclined plane relative to the surface of the cover plate 21, or may be a curved surface or other irregular surface structures.

By adopting the above technical solution, the swelling force of the cell assembly 10 is effectively resisted, thereby effectively limiting the deformation of the cell assembly 10 caused by the swelling, and effectively improving the safety performance of the battery 100.

In some embodiments of the present application, referring to FIGs. 7, 10, 15, and 18 together, the abutment surface 3125 is perpendicular to the cover plate 21.

The abutment surface 3125 being perpendicular to the cover plate 21 means that the abutment surface 3125 is a plane and perpendicular to the surface of the cover plate 21. In the related art, the battery cells 11 in the cell assembly 10 or a battery module composed of multiple battery cells 11 are typically placed vertically on the cover plate 21. By making the abutment surface 3125 perpendicular to the cover plate 21, the abutment surface 3125 can maximally fit against the side of the cell assembly 10, thereby effectively increasing the contact area between the beam body 312 and the cell assembly 10, making the force on the cell assembly 10 more uniform, effectively improving the stress concentration between the beam body 312 and the cell assembly 10, thus more effectively limiting the deformation of the cell assembly 10 caused by the swelling, and further improving the safety performance of the battery 100.

In some embodiments of the present application, referring to FIGs. 7, 10, 15, and 18 together, at least a portion of the support surface 3126 extends in an inclined manner in a direction from the cover plate 21 toward the abutment surface 3125.

In other words, the distance between at least a portion of the support surface 3126 and the abutment surface 3125 in the width direction of the beam body 312 gradually decreases in the direction from the cover plate 21 toward the beam body 312, meaning that the width of at least a portion of the beam body 312 gradually decreases in the direction from the cover plate 21 toward the beam body 312.

By adopting the above technical solution, the support area of the beam body 312 is effectively increased, and the support strength of the beam body 312 is effectively improved, enabling the beam body 312 to more effectively resist the swelling force of the cell assembly 10, thereby further reducing the risk of deformation or displacement of the beam body 312.

In some embodiments of the present application, referring to FIGs. 7, 10, 15, and 18 together, the support surface 3126 is a stepped surface, where the stepped surface extends stepwise in a direction from the cover plate 21 toward the abutment surface 3125.

In other words, the distance between the support surface 3126 and the abutment surface 3125 in the width direction of the beam body 312 decreases stepwise in the direction from the cover plate 21 toward the beam body 312, meaning that the width of at least a portion of the beam body 312 decreases stepwise in the direction from the cover plate 21 toward the beam body 312.

By adopting the above technical solution, the support area of the beam body 312 is effectively increased, and the support strength of the beam body 312 is effectively improved, enabling the beam body 312 to more effectively resist the swelling force of the cell assembly 10, thereby further reducing the risk of deformation or displacement of the beam body 312.

In some embodiments of the present application, referring to FIGs. 7, 10, 15, and 18 together, the abutment surface 3125 is perpendicular to the cover plate 21, the support surface 3126 is a stepped surface, the stepped surface extends stepwise in a direction from the cover plate 21 toward the abutment surface 3125, and at least a portion of the stepped surface extends in an inclined manner in a direction from the cover plate 21 toward the abutment surface 3125.

It can be understood that a portion of the stepped surface facing away from the abutment surface 3125 in the width direction of the beam body 312 may extend in an inclined manner in the direction from the cover plate 21 toward the abutment surface 3125, or a portion of the stepped surface facing the cover plate 21 in the height direction of the beam body 312 may extend in an inclined manner in the direction from the cover plate 21 toward the abutment surface 3125.

By adopting the above technical solution, the contact area between the beam body 312 and the cell assembly 10 is effectively increased, making the force on the cell assembly 10 more uniform, effectively improving the stress concentration between the beam body 312 and the cell assembly 10, thereby more effectively limiting the deformation of the cell assembly 10 caused by the swelling, and further improving the safety performance of the battery 100. Additionally, the support area of the beam body 312 is effectively increased, and the support strength of the beam body 312 is effectively improved, enabling the beam body 312 to more effectively resist the swelling force of the cell assembly 10, thereby further reducing the risk of deformation or displacement of the beam body 312.

In some embodiments of the present application, referring to FIGs. 3, 8 to 10, 11, and 16 to 18 together, the battery 100 further includes a first connecting member 32, where the first connecting member 32 is connected between two adjacent beam structures 31.

The first connecting member 32 is a component configured to connect two adjacent beam structures 31, and serves to restrict the relative positions of the two adjacent beam structures 31. For example, under a condition that the cell assembly 10 experiences swelling, the beam structure 31 is subjected to the swelling force of the cell assembly 10, and in this condition, the first connecting member 32 applies a tensile force to the beam structure 31 in a direction opposite to the swelling force of the cell assembly 10, thereby counteracting the swelling force of the cell assembly 10, reducing the risk of deformation or displacement of the beam structure 31. Under a condition that the beam structure 31 includes the adapter 311 and the beam body 312, the first connecting member 32 is connected to the beam body 312. The material of the first connecting member 32 may be, but is not limited to, aluminum, aluminum alloy, iron, stainless steel, or copper. The connection method between the first connecting member 32 and the beam structure 31 may be, but is not limited to, welding, bonding, or fastening. The first connecting member 32 may be, but is not limited to, a limiting strip, or a limiting plate.

In some embodiments, referring to FIGs. 3, 10, 11, and 18 together, the constraining structure 30 further includes a second fastener 33, where the first connecting member 32 is connected to the beam structure 31 through the second fastener 33. The second fastener 33 may be, but is not limited to, a bolt, a screw, or a rivet.

In some embodiments, referring to FIGs. 3, 10, 11, and 18 together, under a condition that the first connecting member 32 is a limiting strip, the number of first connecting members 32 may be multiple, and the number of first connecting members 32 may be determined based on actual application needs, for example, the number of first connecting members 32 may be two, three, four, five, or six. The multiple first connecting members 32 are arranged in parallel along the length direction of the beam structure 31, with one end of the first connecting member 32 connected to one of the beam structures 31, and another end of the first connecting member 32 connected to the other beam structure 31.

In some other embodiments, under a condition that the first connecting member 32 is a limiting plate, the limiting plate covers between two adjacent beam structures 31 and is connected between two adjacent beam structures 31. In some other embodiments, the first connecting member 32 may also have a cooling flow channel formed therein, where the cooling flow channel is configured to provide a flow space for a cooling medium to exchange heat with the cell assembly 10. In other words, in this embodiment, the first connecting member 32 not only serves to restrict the relative positions of two adjacent beam structures 31 but also may serve as a heat exchange component for exchanging heat with the cell assembly 10.

By adopting the above technical solution, the relative positions of two adjacent beam structures 31 are effectively restricted, thereby further reducing the risk of deformation or displacement of the beam structures 31.

In some embodiments of the present application, referring to FIGs. 3 and 11 together, the first connecting member 32 is connected to a side of the beam structure 31 away from the cover plate 21.

By adopting the above technical solution, the risk of interference between the first connecting member 32 and the cell assembly 10 is effectively reduced, facilitating the connection of the first connecting member 32 to the beam structure 31.

In some embodiments of the present application, the case cover 20 is configured to be connected to an external frame (for example, the vehicle frame 200 of the vehicle 1000).

The connection method between the case cover 20 and the external frame may be, but is not limited to, fastening, welding, or hook-and-loop connection.

In some embodiments, when the battery 100 is assembled to the external frame, the case cover 20, the frame 40, and the guard plate 50 are sequentially connected along the gravity direction of the battery 100, with the side of the case cover 20 facing away from the frame 40 configured to be connected to the external frame, and the cell assembly 10 is connected to the side of the case cover 20 facing the frame 40.

By adopting the above technical solution, at least a portion of the load of the cell assembly 10 can be directly transferred to the external frame through the case cover 20, in other words, the external frame can bear at least a portion of the load of the cell assembly 10, thereby reducing the strength requirements for other support components of the battery 100, reducing the dimensions of these support components, for example, reducing the weight of the frame 40 of the battery 100, effectively reducing the weight of the battery 100, increasing the mass energy density of the battery 100, and thus effectively improving the range performance of the electric device.

In some embodiments of the present application, referring to FIGs. 3 and 11 together, the battery 100 further includes a mounting assembly 60, where the case cover 20 is connected to the mounting assembly 60, and the mounting assembly 60 is configured to be connected to the external frame.

The mounting assembly 60 is a component configured to connect the case cover 20 to the external frame. The mounting assembly 60 may be, but is not limited to, a fastening connection assembly, a hook-and-loop connection assembly, or a clamping connection assembly. The mounting assembly 60 may be disposed on the cover plate 21 of the case cover 20, or the mounting assembly 60 may be disposed on the enclosing structure 22 of the case cover 20.

The adoption of the above technical solution facilitates the connection of the case cover 20 to the external frame.

In some embodiments of the present application, referring to FIGs. 3 and 11 together, at least a portion of the mounting assembly 60 includes a support member 61 and a second connecting member 62, where the support member 61 is connected to the case cover 20, and the second connecting member 62 is connected to the support member 61 and configured to be connected to the external frame.

It can be understood that the number of mounting assemblies 60 may be multiple, where some of the mounting assemblies 60 may be connected to the middle of the cover plate 21, some of the mounting assemblies 60 may be connected to the outer peripheral side of the cover plate 21 or the enclosing structure 22, and the mounting assemblies 60 connected to the middle of the cover plate 21 may include the support member 61 and the second connecting member 62.

The support member 61 is a support component of the mounting assembly 60. The support member 61 may be, but is not limited to, a support plate or a support beam. The material of the support member 61 may be, but is not limited to, aluminum, aluminum alloy, iron, stainless steel, or copper. The connection method between the support member 61 and the cover plate 21 may be, but is not limited to, welding, fastening, or bonding. The number of support members 61 may be one or multiple.

The second connecting member 62 is a component configured to connect to the external frame. The second connecting member 62 may be, but is not limited to, a bolt, a screw, a rivet, or a hook. The connection method between the second connecting member 62 and the support member 61 may be, but is not limited to, welding, or fastening. In some embodiments, each support member 61 is provided with one second connecting member 62, and in some other embodiments, each support member 61 is provided with multiple second connecting members 62.

The adoption of the above technical solution facilitates the connection of the case cover 20 to the external frame.

In some embodiments of the present application, referring to FIGs. 3, 4, 11, and 12 together, the cell assembly 10 is connected to a lower portion of the cover plate 21, the support member 61 is connected to the cover plate 21, and the second connecting member 62 connects the support member 61 and the cover plate 21 to the external frame.

It can be understood that, when the case cover 20 is connected to the external frame, the upper portion of the cover plate 21 is directly opposite the external frame, and the lower portion of the cover plate 21 is directly opposite the guard plate 50.

In some embodiments, the support member 61 is connected to the upper portion of the cover plate 21 and extends along the width direction of the battery 100. In other words, the support member 61 has a strip-like structure, and the length direction of the support member 61 is parallel to the width direction of the battery 100. Under a condition that one side of the battery 100 along the width direction is subjected to an external impact, the impact energy can be transferred from one end of the support member 61 to the other end, effectively reducing the risk of bending of the support member 61, thereby effectively improving the impact resistance of the cover plate 21 of the case cover 20 in the width direction of the battery 100, effectively reducing the risk of deformation of the case cover 20 when subjected to an external force impact on one side along the width direction of the battery 100, and thus effectively reducing the risk of damage to the cell assembly 10.

Of course, in some other embodiments, the support member 61 may also extend along the length direction of the battery 100.

By adopting the above technical solution, the strength of the cover plate 21 is effectively improved, thereby effectively enhancing the load-bearing capacity of the cover plate 21 for the cell assembly 10.

In some embodiments of the present application, referring to FIGs. 3, 11, and 19 together, the frame 40 includes a first support beam 41, where the first support beam 41 includes a support beam body 411 and an energy-absorbing beam body 412, and the energy-absorbing beam body 412 is connected to a side of the support beam body 411 facing away from the cell assembly 10.

The first support beam 41 is a part of the support components of the frame 40. In some embodiments, the dimension of the first support beam 41 along the width direction of the battery 100 is smaller than the dimension along the length direction of the battery 100, meaning that the first support beam 41 extends along the length direction of the battery 100, for example, the first support beam 41 extends linearly along the length direction of the battery 100, for another example, the first support beam 41 extends with a bend along the length direction of the battery 100. The number of first support beams 41 may be two, and the two first support beams 41 are spaced apart along the width direction of the battery 100. In some other embodiments, the dimension of the first support beam 41 along the length direction of the battery 100 is smaller than the dimension along the width direction of the battery 100, meaning that the first support beam 41 extends along the width direction of the battery 100, for example, the first support beam 41 extends linearly along the width direction of the battery 100, for another example, the first support beam 41 extends with a bend along the width direction of the battery 100. The number of first support beams 41 may be two, and the two first support beams 41 are spaced apart along the length direction of the battery 100.

The support beam body 411 is the main support component of the first support beam 41, and the energy-absorbing beam body 412 is configured to absorb the impact energy of an external force acting on the first support beam 41. In some embodiments, the energy-absorbing beam body 412 may have a strip-like structure and extend along the length direction of the support beam body 411. In some other embodiments, the energy-absorbing beam body 412 may include multiple energy-absorbing portions (not shown in the figures), and the multiple energy-absorbing portions are spaced apart along the length direction of the support beam body 411. In some embodiments, the support beam body 411 and the energy-absorbing beam body 412 may be an integrally formed component, for example, the support beam body 411 and the energy-absorbing beam body 412 are integrally formed by a linear extrusion process. In some other embodiments, the support beam body 411 and the energy-absorbing beam body 412 may be separate components, for example, the support beam body 411 and the energy-absorbing beam body 412 are separately formed and then connected to each other, where the connection method between the support beam body 411 and the energy-absorbing beam body 412 may be, but is not limited to, welding, or fastening. Under a condition that the support beam body 411 and the energy-absorbing beam body 412 are separate components, the material of the support beam body 411 and the material of the energy-absorbing beam body 412 may be the same, for example, the material of the support beam body 411 and the material of the energy-absorbing beam body 412 are aluminum alloy, or the material of the support beam body 411 and the material of the energy-absorbing beam body 412 may be different, for example, the material of the support beam body 411 is aluminum alloy, and the material of the energy-absorbing beam body 412 is stainless steel.

In some embodiments, the frame 40 may further include a second support beam 42 connected between two first support beams 41, where the second support beam 42 is another support component of the frame 40, and the material of the second support beam 42 may be, but is not limited to, aluminum, aluminum alloy, iron, stainless steel, or copper. Under a condition that the first support beam 41 extends along the length direction of the battery 100, the dimension of the second support beam 42 along the length direction of the battery 100 is smaller than the dimension along the width direction of the battery 100, meaning that the second support beam 42 extends along the width direction of the battery 100, for example, the second support beam 42 extends linearly along the width direction of the battery 100, for another example, the second support beam 42 extends with a bend along the width direction of the battery 100. The number of second support beams 42 may be two, and the two second support beams 42 are spaced apart along the length direction of the battery 100. Under a condition that the first support beam 41 extends along the width direction of the battery 100, the dimension of the second support beam 42 along the width direction of the battery 100 is smaller than the dimension along the length direction of the battery 100, meaning that the second support beam 42 extends along the length direction of the battery 100, for example, the second support beam 42 extends linearly along the length direction of the battery 100, for another example, the second support beam 42 extends with a bend along the length direction of the battery 100. The number of second support beams 42 may be two, and the two second support beams 42 are spaced apart along the width direction of the battery 100. The second support beam 42 may be provided with an electrical interface for connecting a high-voltage box, a pipeline interface for connecting thermal management components, and the like.

By adopting the above technical solution, under a condition that the outer side of the battery 100 is subjected to an external impact, the energy-absorbing beam body 412 can effectively absorb the impact energy, thereby effectively mitigating the transfer of impact energy to the cell assembly 10 through the frame 40, and effectively reducing the risk of damage to the cell assembly 10.

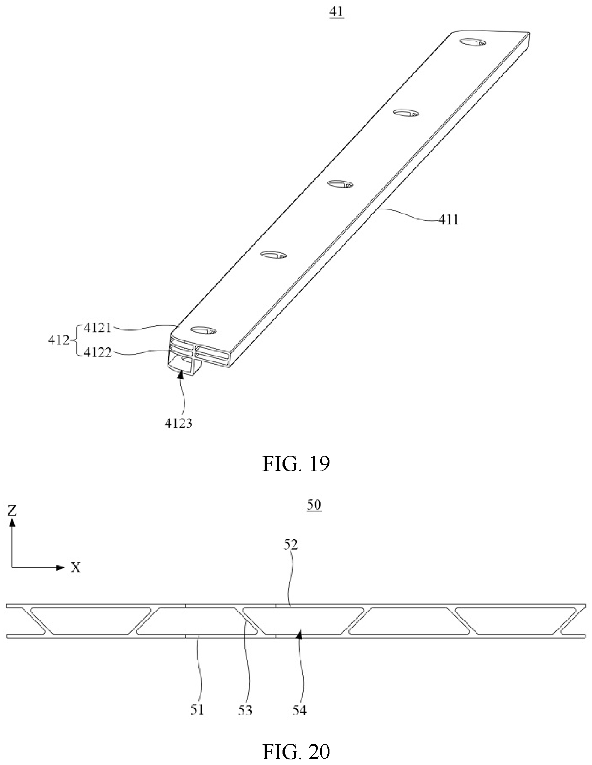

In some embodiments of the present application, referring to FIG. 19, the energy-absorbing beam body 412 includes a main beam body 4121 and a first energy-absorbing body 4122, where the main beam body 4121 is connected to a side of the support beam body 411 facing away from the cell assembly 10 and has a first energy-absorbing cavity 4123, and the first energy-absorbing body 4122 is disposed in the first energy-absorbing cavity 4123.

The main beam body 4121 is the main part of the energy-absorbing beam body 412, the main beam body 4121 has a hollow structure, the cavity of the main beam body 4121 constitutes the first energy-absorbing cavity 4123, and the first energy-absorbing cavity 4123 is configured to provide a collapse space for the main beam body 4121. Under a condition that the energy-absorbing beam body 412 is subjected to an external impact, the main beam body 4121 can collapse inward and deform, thereby effectively absorbing the impact energy. The cross-sectional shape of the main beam body 4121 may be, but is not limited to, square, circular, or triangular.

The first energy-absorbing body 4122 is configured to support the main beam body 4121, providing secondary energy absorption, meaning that under a condition that the energy-absorbing beam body 412 is subjected to an external impact, when the main beam body 4121 absorbs the impact energy and undergoes collapse deformation, the main beam body 4121 compresses the first energy-absorbing body 4122, causing the first energy-absorbing body 4122 to undergo collapse deformation, thereby achieving secondary energy absorption. The first energy-absorbing body 4122 may be, but is not limited to, an energy-absorbing rib, or an energy-absorbing adhesive.

By adopting the above technical solution, under a condition that the outer side of the battery 100 is subjected to an external impact, the impact energy can be transferred to the first energy-absorbing body 4122 through the main beam body 4121, causing the main beam body 4121 and the first energy-absorbing body 4122 to deform sequentially, thereby enabling the energy-absorbing beam body 412 to more effectively absorb the impact energy, further reducing the risk of damage to the cell assembly 10.

In some embodiments of the present application, referring to FIG. 20, the guard plate 50 includes a first plate 51, a second plate 52, and a second energy-absorbing body 53, where the first plate 51 and the second plate 52 are spaced apart along the height direction of the battery 100 to form a second energy-absorbing cavity 54, and the second energy-absorbing body 53 is disposed in the second energy-absorbing cavity 54.

The first plate 51 and the second plate 52 together constitute the main body of the guard plate 50, where the first plate 51 and the second plate 52 are spaced apart along the height direction of the battery 100 to form the second energy-absorbing cavity 54. It can be understood that the first plate 51 and the second plate 52 are parallel to each other, with the surface of the first plate 51 opposite and spaced apart from the surface of the second plate 52. The first plate 51 may be disposed on the side of the second plate 52 facing away from the case cover 20, or the second plate 52 may be disposed on the side of the first plate 51 facing away from the case cover 20. The first plate 51 and the second plate 52 are connected together through necessary connection structures.

The second energy-absorbing body 53 provides secondary energy absorption, meaning that under a condition that the main body composed of the first plate 51 and the second plate 52 are subjected to an external impact, the main body compresses the second energy-absorbing body 53, causing the second energy-absorbing body 53 to undergo collapse deformation, thereby achieving secondary energy absorption. The second energy-absorbing body 53 may be, but is not limited to, an energy-absorbing rib, or an energy-absorbing adhesive. The material of the first plate 51, the material of the second plate 52, and the material of the second energy-absorbing body 53 may be the same, for example, the material of the first plate 51, the material of the second plate 52, and the material of the second energy-absorbing body 53 are aluminum alloy. Alternatively, the material of the first plate 51, the material of the second plate 52, and the material of the second energy-absorbing body 53 may be different, for example, the material of the first plate 51 and the material of the second plate 52 are aluminum alloy, and the material of the second energy-absorbing body 53 is stainless steel.

By adopting the above technical solution, under a condition that the bottom of the battery 100 is subjected to an external impact, the impact energy can be transferred to the second energy-absorbing body 53, causing the second energy-absorbing body 53 to deform, thereby enabling the guard plate 50 to more effectively absorb the impact energy, and further reducing the risk of damage to the cell assembly 10.

In some embodiments of the present application, the cell assembly 10 is bonded to the case cover 20.

In some embodiments, an adhesive layer may be applied on the case cover 20, the cell assembly 10 is placed on the adhesive layer, and after the adhesive layer solidifies, the cell assembly 10 is bonded to the case cover 20.

In some other embodiments, the cell assembly 10 may be placed on the case cover 20, adhesive is poured onto the case cover 20, and after the adhesive layer solidifies, the cell assembly 10 is bonded to the case cover 20.

By adopting the above technical solution, the stress distribution between the cell assembly 10 and the case cover 20 can become more uniform, and the assembly process of the cell assembly 10 and the case cover 20 can be simplified, thereby effectively improving the assembly efficiency of the battery 100.

According to a second aspect, referring to FIG. 1, an embodiment of the present application provides an electric device including the battery 100 described above.

As the electric device provided in this embodiment of the present application adopts the battery 100 described above, the reliability of the electric device is effectively improved.

The above are merely optional embodiments of the present application and are not intended to limit the present application. For those skilled in the art, various modifications and variations can be made to the present application. Any modifications, equivalent substitutions, improvements, and the like made within the spirit and principles of the present application shall be included within the scope of the claims of the present application.

## Claims

1. A battery, **characterized in that** the battery comprises:
a cell assembly;
a case cover, configured to be fixedly connected to the cell assembly, wherein the case cover has a cavity, and the cavity is configured to accommodate at least a portion of the cell assembly; and
a constraining structure, configured to constrain swelling of the cell assembly, wherein the constraining structure is disposed on the case cover.

2. The battery according to claim 1, **characterized in that** the constraining structure comprises two beam structures spaced apart, wherein the two beam structures cooperate to clamp the cell assembly.

3. The battery according to claim 2, **characterized in that** the case cover comprises a cover plate and an enclosing structure connected to the cover plate, wherein the enclosing structure and the cover plate enclose the cavity, and the beam structure is connected to at least one of the cover plate and the enclosing structure.

4. The battery according to claim 3, **characterized in that** the beam structure comprises an adapter and a beam body, wherein the adapter comprises a matching portion and an installation portion connected to each other, the matching portion is shape-fitted and connected to at least a portion of an inner wall surface of the enclosing structure, and the beam body is connected to the installation portion.

5. The battery according to claim 4, **characterized in that** the enclosing structure comprises a first wall and a second wall that are arranged opposite each other, and the adapter comprises a first adapter and a second adapter, wherein the matching portion of the first adapter is shape-fitted and connected to at least a portion of an inner wall surface of the first wall, the matching portion of the second adapter is shape-fitted and connected to at least a portion of an inner wall surface of the second wall, one end of the beam body is connected to the installation portion of the first adapter, and the other end of the beam body is connected to the installation portion of the second adapter.

6. The battery according to claim 5, **characterized in that** two ends of the beam body are each provided with an installation cavity, wherein the installation portion of the first adapter is embedded in one installation cavity, and the installation portion of the second adapter is embedded in the other installation cavity.

7. The battery according to claim 5 or 6, **characterized in that** the beam body is connected to the cover plate.

8. The battery according to claim 7, **characterized in that** the beam body comprises a first main body and a first flange, wherein one end of the first main body is connected to the installation portion of the first adapter, another end of the first main body is connected to the installation portion of the second adapter, the first flange is connected to a side of the first main body along a width direction of the beam body, and the first flange is connected to the cover plate.

9. The battery according to claim 8, **characterized in that** the first flange is connected to a side of the first main body facing the cell assembly, the cover plate is provided with a first groove, the first flange is connected to a bottom of the first groove, and a depth of the first groove is greater than or equal to a thickness of the first flange.

10. The battery according to claim 9, **characterized in that** the beam body further comprises a second flange, wherein the second flange is connected to a side of the first main body facing away from the cell assembly, and the second flange is connected to the cover plate.

11. The battery according to any one of claims 7 to 10, **characterized in that** the beam body is welded to the cover plate.

12. The battery according to claim 4, **characterized in that** the enclosing structure comprises a first wall and a second wall that are arranged opposite each other, and the matching portion comprises a first matching portion and a second matching portion, wherein the first matching portion is shape-fitted and connected to at least a portion of an inner wall surface of the first wall, the second matching portion is shape-fitted and connected to at least a portion of an inner wall surface of the second wall, one end of the installation portion is connected to the first matching portion, another end of the installation portion is connected to the second matching portion, and the beam body extends in a direction from the first matching portion toward the second matching portion.

13. The battery according to claim 12, **characterized in that** the beam body is provided with an installation cavity, and the installation portion is embedded in the installation cavity.

14. The battery according to any one of claims 4 to 13, **characterized in that** the installation portion is connected to the cover plate.

15. The battery according to claim 14, wherein the installation portion comprises a second main body and a third flange, wherein the beam body is installed on the second main body, and the third flange is connected between the second main body and the cover plate.

16. The battery according to claim 15, **characterized in that** the third flange is connected to a side of the second main body facing the cell assembly, the cover plate is provided with a second groove, the third flange is connected to a bottom of the second groove, and a depth of the second groove is greater than or equal to a thickness of the third flange.

17. The battery according to claim 16, **characterized in that** the installation portion further comprises a fourth flange, wherein the fourth flange is connected to a side of the second main body facing away from the cell assembly, and the fourth flange is connected to the cover plate.

18. The battery according to any one of claims 14 to 17, **characterized in that** the installation portion is welded to the cover plate.

19. The battery according to any one of claims 4 to 18, **characterized in that** the beam body has a support surface and an abutment surface, wherein the support surface is disposed facing away from the cell assembly, and the abutment surface is disposed opposite to the cell assembly and configured to abut against the cell assembly to resist the swelling force of the cell assembly.

20. The battery according to claim 19, **characterized in that** at least a portion of the support surface extends in an inclined or stepped manner in a direction from the cover plate toward the abutment surface.

21. The battery according to any one of claims 3 to 20, **characterized in that** the constraining structure further comprises a first connecting member, wherein the first connecting member is connected between the two beam structures.

22. The battery according to claim 21, **characterized in that** the first connecting member is connected to a side of the beam structure away from the cover plate.

23. The battery according to any one of claims 3 to 22, **characterized in that** the case cover is configured to be connected to an external frame.

24. The battery according to claim 23, **characterized in that** the battery further comprises a mounting assembly, wherein the case cover is connected to the mounting assembly, and the mounting assembly is configured to be connected to the external frame.

25. The battery according to claim 24, **characterized in that** at least a portion of the mounting assembly comprises a support member and a second connecting member, wherein the support member is connected to the case cover, and the second connecting member is connected to the support member and configured to be connected to the external frame.

26. The battery according to claim 25, **characterized in that** the cell assembly is connected to a lower portion of the cover plate, the support member is connected to the cover plate, and the second connecting member connects the support member and the cover plate to the external frame.

27. The battery according to any one of claims 1 to 26, **characterized in that** the battery further comprises a frame and a guard plate, wherein the case cover, the frame, and the guard plate are sequentially connected along a gravity direction of the battery.

28. The battery according to claim 27, **characterized in that** the frame comprises a first support beam, wherein the first support beam comprises a support beam body and an energy-absorbing beam body, and the energy-absorbing beam body is connected to a side of the support beam body facing away from the cell assembly.

29. The battery according to claim 28, **characterized in that** the energy-absorbing beam body comprises a main beam body and a first energy-absorbing body, wherein the main beam body is connected to a side of the support beam body facing away from the cell assembly and has a first energy-absorbing cavity, and the first energy-absorbing body is disposed in the first energy-absorbing cavity.

30. The battery according to any one of claims 27 to 29, **characterized in that** the guard plate comprises a first plate, a second plate, and a second energy-absorbing body, wherein the first plate and the second plate are spaced apart along a height direction of the battery to form a second energy-absorbing cavity, and the second energy-absorbing body is disposed in the second energy-absorbing cavity.

31. The battery according to any one of claims 1 to 30, **characterized in that** the cell assembly is bonded to the case cover.

32. An electric device, **characterized in that**, the electric device comprises the battery according to any one of claims 1 to 31.
